# EUROPEAN PATENT APPLICATION

(11) **EP 4 554 244 A1**
(43) Date of publication of application: **14.05.2025**
(21) Application number: 23890555.8
(22) Date of filing: 30.10.2023
(51) Int. Cl.: H04N 23/50, H04N 23/67, H04N 23/68

(54) **LENS MOTOR, CAMERA MODULE, AND ELECTRONIC DEVICE**

(30) Priority: 18.11.2022 CN 202211448545
(71) Applicant: Huawei Technologies Co., Ltd., Shenzhen, Guangdong 518129 (CN)
(72) Inventor: CAI, Bin, Shenzhen, Guangdong 518129 (CN); LI, Dengfeng, Shenzhen, Guangdong 518129 (CN); WAN, Haibo, Shenzhen, Guangdong 518129 (CN); REN, Li, Shenzhen, Guangdong 518129 (CN)
(74) Representative: Körber, Martin Hans
(86) International application number: PCT/CN2023/127926
(87) International publication number: WO 2024/104119

(57) **Abstract**

This application provides a lens motor, a camera module, and an electronic device. The lens motor includes a stator, a focus bracket, an image stabilization bracket, a focus driving mechanism, an image stabilization driving mechanism, and a driver chip. The focus bracket is movably connected to the stator, the image stabilization bracket is movably connected to the focus bracket and is located on an inner side of the focus bracket, and the image stabilization bracket is configured to mount a lens. The driver chip is configured to control the focus driving mechanism, so that the focus driving mechanism drives the focus bracket to drive the image stabilization bracket to move relative to the stator in a first direction. The driver chip is further configured to control the image stabilization driving mechanism, so that the image stabilization driving mechanism drives the image stabilization bracket to move relative to the focus bracket in a second direction and a third direction. In this application, the driver chip is built in the lens motor, so that in a production process of the camera module, related calibration data can be directly burnt into the driver chip in the lens motor in a motor factory. This saves a subsequent calibration process in a module factory and improves production efficiency.

## Description

This application claims priority to Chinese Patent Application No. 202211448545.X, filed with the China National Intellectual Property Administration on November 18, 2022, and entitled "LENS MOTOR, CAMERA MODULE, AND ELECTRONIC DEVICE", which is incorporated herein by reference in its entirety.

### TECHNICAL FIELD

This application relates to the field of camera technologies, and in particular, to a lens motor, a camera module, and an electronic device.

### BACKGROUND

With popularization and development of smartphones, image shooting by using a mobile phone becomes an image shooting manner commonly used by people, and a mobile phone having both an optical image stabilization function and an automatic focus function is increasingly popular with users. A conventional camera module includes a module circuit board, an image stabilization driver chip, and a focus driver chip. Because both the image stabilization driver chip and the focus driver chip are made on the module circuit board, calibration data cannot be burnt in a motor factory in a production process of the image stabilization driver chip and the focus driver chip, and subsequent calibration needs to be performed in a module factory. Consequently, a calibration process of the driver chip is complex, and overall production efficiency of the camera module is low.

### SUMMARY

Embodiments of this application provide a lens motor, a camera module including the lens motor, and an electronic device including the camera module, to obtain a lens motor and a camera module that have a simple process and high production efficiency.

According to a first aspect, a lens motor is provided. The lens motor includes a stator, a focus bracket, an image stabilization bracket, a focus driving mechanism, an image stabilization driving mechanism, and a driver chip. The focus bracket is movably connected to the stator, the image stabilization bracket is movably connected to the focus bracket and is located on an inner side of the focus bracket, and the image stabilization bracket is configured to mount a lens. The driver chip is configured to control the focus driving mechanism, so that the focus driving mechanism drives the focus bracket to drive the image stabilization bracket to move relative to the stator in a first direction; and the driver chip is further configured to control the image stabilization driving mechanism, so that the image stabilization driving mechanism drives the image stabilization bracket to move relative to the focus bracket in a second direction and a third direction, where the first direction is an optical axis direction of the lens, and the second direction and the third direction are different from the first direction.

It may be understood that a conventional driver chip of a lens motor is usually disposed on a module circuit board outside the lens motor. Therefore, in a production process of a camera module, related calibration data cannot be burnt for a driver chip in a motor factory, and related calibration work needs to be performed for the driver chip in a module factory. However, the driver chip in this application is built in the lens motor, so that in the production process of the camera module, the related calibration data can be directly burnt into the driver chip in the lens motor in the motor factory. This saves a subsequent calibration process in the module factory and improves production efficiency. In addition, when a feature variation of the lens motor is caused by a factor like reliability or a module manufacturing process, it facilitates data comparison after the feature variation on the lens motor.

In addition, compared with a lens motor that needs a plurality of driver chips to separately control an image stabilization driving mechanism and a focus driving mechanism, the lens motor in this application controls both the image stabilization driving mechanism and the focus driving mechanism by using one driver chip. When one of the image stabilization driving mechanism and the focus driving mechanism needs to obtain position information of the other, the driver chip may perform corresponding algorithm compensation to obtain the corresponding position information. In this way, information exchange between the image stabilization driving mechanism and the focus driving mechanism is faster, and the driver chip does not need to perform additional data burning. This helps improve efficiency of obtaining position information by the driver chip and increase a response speed of the lens motor.

In addition, the lens motor in this application is an integrated motor that has both an image stabilization function and a focus function, and the driver chip is built in the lens motor. In this way, the driver chip inside the lens motor may simultaneously control the focus bracket to drive the image stabilization bracket to move relative to the stator in the first direction to implement the focus function, and control the image stabilization bracket to move relative to the focus bracket in the second direction and the third direction to implement the image stabilization function. Compared with a split lens motor in which a focus bracket and an image stabilization bracket are separately disposed, the lens motor in this application has a smaller size, which helps implement miniaturization of the lens motor, and helps save an internal space of an electronic device.

In a possible implementation, the stator includes a base, the focus bracket is movably connected to the base, the base is provided with a first avoidance hole, and an outer circumferential side and an inner circumferential side of the base are communicated with each other through the first avoidance hole. The lens motor further includes a circuit board, where the circuit board is fastened to the outer circumferential side of the base, the driver chip is fastened to the circuit board and is electrically connected to the circuit board, and at least a part of the driver chip is located in the first avoidance hole. In this way, the driver chip is disposed in the first avoidance hole by using a thickness size of the base. This can effectively reduce a space occupied by the driver chip inside the lens motor and help improve space utilization of the lens motor.

In a possible implementation, the image stabilization driving mechanism includes an image stabilization coil and an image stabilization magnetic piece, the image stabilization coil is fastened to the circuit board and is electrically connected to the circuit board, the image stabilization magnetic piece is fastened to the image stabilization bracket, and the image stabilization coil and the image stabilization magnetic piece are disposed opposite to each other. The image stabilization coil is electrically connected to the driver chip, and the driver chip is further configured to control the image stabilization coil, to drive, through cooperation between the image stabilization coil and the image stabilization magnetic piece, the image stabilization bracket to move relative to the focus bracket in the second direction or the image stabilization bracket to move relative to the focus bracket in the third direction. In this way, the driver chip may control the image stabilization coil, and drive, by using a driving force generated through cooperation between the image stabilization coil and the image stabilization magnetic piece, the image stabilization bracket to move, to implement the image stabilization function of the lens motor.

In a possible implementation, the image stabilization coil passes through the first avoidance hole and faces the image stabilization magnetic piece. In this way, the image stabilization coil and the driver chip may be located on a same side of the circuit board. In addition, both the image stabilization coil and the driver chip are located in the first avoidance hole. This can effectively reduce the space occupied by the image stabilization coil and the driver chip in the lens motor, and help improve the space utilization of the lens motor.

In a possible implementation, a first avoidance groove is provided on the base, and the first avoidance groove penetrates a bottom of the base. A second avoidance groove is provided on the focus bracket, and a bottom space of the image stabilization bracket communicates with the first avoidance groove through the second avoidance groove. The first avoidance groove, the second avoidance groove, and the bottom space of the image stabilization bracket form a mounting space, and the mounting space is used to accommodate a part of a prism.

It may be understood that, in this application, the lens motor is disposed with the mounting space, and at least a part of the prism may be located in the mounting space, so that the lens motor may sink relative to the prism, to reduce a height of the lens motor and reduce an overall height of the camera module. This facilitates thinning of the camera module. In addition, an overall structure of the camera module is more compact, which helps save the internal space of the electronic device.

In a possible implementation, the image stabilization bracket includes a first bracket and a second bracket, the first bracket is located between the focus bracket and a bottom of the second bracket, the first bracket is movably connected to the focus bracket, and the second bracket is movably connected to the first bracket. The driver chip is configured to control the image stabilization driving mechanism, so that the image stabilization driving mechanism drives the first bracket to drive the second bracket to move relative to the focus bracket in the second direction; and the driver chip is further configured to control the image stabilization driving mechanism, so that the image stabilization driving mechanism drives the second bracket to move relative to the first bracket in the third direction. In this way, the first bracket and the second bracket are stacked, and then the first bracket is separately controlled to move relative to the focus bracket in the second direction, and the second bracket is separately controlled to move relative to the first bracket in the third direction, so that the image stabilization bracket can drive a lens to move relative to the focus bracket in the second direction and in the third direction. This implements the image stabilization function.

In a possible implementation, the image stabilization coil includes a first coil and a second coil, the image stabilization magnetic piece includes a first magnetic piece and a second magnetic piece, the first coil and the first magnetic piece are disposed opposite to each other, and the second coil and the second magnetic piece are disposed opposite to each other. The driver chip is configured to control the first coil, to drive, through cooperation between the first coil and the first magnetic piece, the first bracket to move relative to the focus bracket in the second direction, and the driver chip is further configured to control the second coil, to drive, through cooperation between the second coil and the second magnetic piece, the second bracket to move relative to the first bracket in the third direction. In this way, the driver chip may separately control the first coil and the second coil, drive the first bracket to move by using a driving force generated through cooperation between the first coil and the first magnetic piece, and drive the second bracket to move by using a driving force generated through cooperation between the second coil and the second magnetic piece, to implement an image stabilization function of the lens motor.

In a possible implementation, the first coil includes a first sub-coil and a second sub-coil, the first magnetic piece includes a first magnetic sub-piece and a second magnetic sub-piece, the first magnetic sub-piece and the second magnetic sub-piece are located between the first sub-coil and the second sub-coil, the first sub-coil and the first magnetic sub-piece are disposed opposite to each other, and the second sub-coil and the second magnetic sub-piece are disposed opposite to each other. In this way, a driving force generated through cooperation between the first sub-coils and the first magnetic sub-piece is superimposed on a driving force generated through cooperation between the second sub-coils and the second magnetic sub-piece. This can increase a driving force of the image stabilization driving mechanism for the first bracket, help increase a moving speed of the first bracket, and increase an image stabilization response speed of the lens motor in the second direction.

In a possible implementation, the first bracket is movably connected to the focus bracket through roll balls, and/or the second bracket is movably connected to the first bracket through roll balls. It may be understood that because a friction coefficient of the roll ball is small, a friction force between the first bracket and the focus bracket is small, and a friction force between the second bracket and the first bracket is small. This can reduce a driving force required by the image stabilization driving mechanism, help reduce an energy loss of the lens motor, and prolong standby time of the electronic device.

In a possible implementation, the first bracket includes a first branch and a second branch, the second branch is connected to the first branch, and an angle between the second branch and the first branch is less than 180°. A bottom of the focus bracket includes a first portion and a second portion, the second portion is stacked on the first portion, a part of the second portion is disposed opposite to the first branch, and another part of the second portion is disposed opposite to the second branch. In this way, the second portion may be raised relative to the first portion, and the first bracket may sink relative to the second portion, to reduce an overall thickness of the lens motor. This facilitates thinning of the lens motor. In addition, the second portion is raised relative to the first portion, so that the bottom space of the second portion can be released. This helps increase the available space inside the lens motor.

In a possible implementation, the bottom space is located at a bottom of the second portion. An inner side surface of the first portion faces the bottom space. In this way, the bottom space of the second portion may also be used for arranging at least a part of the prism, to reduce the overall height of the camera module. This facilitates thinning of the camera module. In addition, an overall structure of the camera module is more compact, which helps save the internal space of the electronic device.

In a possible implementation, the focus bracket is movably connected to the stator through a sliding shaft. In this way, because a friction coefficient of the sliding shaft is large, after the lens motor is powered off, the focus bracket can still implement self-locking by using a friction force between the focus bracket and the sliding shaft, and no external power supply is required to continuously power on the lens motor. This helps save a power supply and prolong standby time of the electronic device. In addition, when the focus bracket moves, it is hard to generate a deflection, which helps ensure a focus effect of the lens motor and improve imaging quality of the camera module.

In a possible implementation, the focus driving mechanism includes a focus coil and a focus magnetic piece, the focus coil is fastened to the circuit board and is electrically connected to the circuit board, the focus magnetic piece is fastened to the focus bracket, and the focus coil and the focus magnetic piece are disposed opposite to each other. The focus coil is electrically connected to the driver chip, and the driver chip is further configured to control the focus coil, to drive, through cooperation between the focus coil and the focus magnetic piece, the focus bracket to drive the image stabilization bracket to move relative to the stator in the first direction. In this way, the driver chip may control the focus coil, and drive the focus bracket to move by using a driving force generated through cooperation between the focus coil and the focus magnetic piece, to implement the focus function of the lens motor.

In a possible implementation, the lens motor further includes a first magnetic attraction sheet, the first magnetic attraction sheet is fastened to the circuit board, the focus coil is located between the first magnetic attraction sheet and the focus magnetic piece, and the focus bracket squeezes the sliding shaft under an action force between the first magnetic attraction sheet and the focus magnetic piece. In this way, the first magnetic attraction sheet may absorb the focus magnetic piece, so that the focus bracket may squeeze the sliding shaft, and the focus bracket may be in close contact with the sliding shaft. This can effectively avoid tilting when the focus bracket moves relative to the stator.

In a possible implementation, the lens motor further includes a first sensor, the first sensor is fastened to the circuit board and is electrically connected to the circuit board, the driver chip is electrically connected to the first sensor, the first sensor is configured to detect a position of the focus bracket, and the driver chip is further configured to obtain information about the first sensor. In this way, the driver chip can obtain the position information of the focus bracket in a timely manner. This helps improve efficiency of obtaining the position information by the driver chip and increase a response speed of the lens motor.

In a possible implementation, the lens motor further includes a cover, the cover is connected to the focus bracket, and the cover is located on a side that is of the image stabilization bracket and that is away from the focus bracket. In this way, when the electronic device is turned over and tilted, the image stabilization bracket can be effectively prevented from being detached from the focus bracket. This helps improve structural reliability of the lens motor.

According to a second aspect, a camera module is provided. The camera module includes a lens, a prism, a photosensitive chip, and the foregoing lens motor. The lens is mounted on the image stabilization bracket, the prism is located on a light exit side of the lens, and the photosensitive chip is located on a light exit side of the prism.

It may be understood that a conventional driver chip of a lens motor is usually disposed on a module circuit board outside the lens motor. Therefore, in a production process of a camera module, related calibration data cannot be burnt for a driver chip in a motor factory, and related calibration work needs to be performed for the driver chip in a module factory. However, the driver chip in this application is built in the lens motor, so that in the production process of the camera module, the related calibration data can be directly burnt into the driver chip in the lens motor in the motor factory. This saves a subsequent calibration process in the module factory and improves production efficiency. In addition, when a feature variation of the lens motor is caused by a factor like reliability or a module manufacturing process, it facilitates data comparison after the feature variation on the lens motor.

In addition, compared with a lens motor that needs a plurality of driver chips to separately control an image stabilization driving mechanism and a focus driving mechanism, the lens motor in this application controls both the image stabilization driving mechanism and the focus driving mechanism by using one driver chip. When one of the image stabilization driving mechanism and the focus driving mechanism needs to obtain position information of the other, the driver chip may perform corresponding algorithm compensation to obtain the corresponding position information. In this way, information exchange between the image stabilization driving mechanism and the focus driving mechanism is faster, and the driver chip does not need to perform additional data burning. This helps improve efficiency of obtaining position information by the driver chip and increase a response speed of the lens motor.

In addition, the lens motor in this application is an integrated motor that has both an image stabilization function and a focus function, and the driver chip is built in the lens motor. In this way, the driver chip inside the lens motor may simultaneously control the focus bracket to drive the image stabilization bracket to move relative to the stator in the first direction to implement the focus function, and control the image stabilization bracket to move relative to the focus bracket in the second direction and the third direction to implement the image stabilization function. Compared with a split lens motor in which a focus bracket and an image stabilization bracket are separately disposed, the lens motor in this application has a smaller size, which helps implement miniaturization of the lens motor, and helps save an internal space of an electronic device.

In a possible implementation, the prism includes a first surface, a first slope, a second surface, and a second slope that are sequentially connected, the lens and the photosensitive chip are both located on a side that is of the first surface and that is back to the second surface, the first surface includes a first area and a second area, the lens and the first area are disposed opposite to each other, and the photosensitive chip and the second area are disposed opposite to each other. After passing through the lens, ambient light enters the prism from the first area of the first surface. After being reflected a plurality of times inside the prism, the ambient light is emitted from the second area of the first surface. The photosensitive chip collects the ambient light passing through the prism. In this way, compared with a camera module in which a lens and a photosensitive chip are located on different sides of a prism, the camera module in this application in which the lens and the photosensitive chip are located on the same side of the prism helps reduce an overall height of the camera module and implement thinning of the camera module.

According to a third aspect, an electronic device is provided. The electronic device includes a device housing and the foregoing camera module, and the camera module is disposed on the device housing. It may be understood that the lens motor in the electronic device in this application is an integrated motor that has both an image stabilization function and a focus function, and the driver chip is built in the lens motor. In this way, the driver chip inside the lens motor may simultaneously control the focus bracket to drive the image stabilization bracket to move relative to the stator in the first direction to implement the focus function, and control the image stabilization bracket to move relative to the focus bracket in the second direction and the third direction to implement the image stabilization function. Compared with a split lens motor in which a focus bracket and an image stabilization bracket are separately disposed, the lens motor in this application has a smaller size, which helps implement miniaturization of the lens motor, and helps save an internal space of an electronic device.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of an electronic device according to an embodiment of this application;
FIG. 2a is a partial sectional view of an implementation of the electronic device shown in FIG. 1 on an A-A line;
FIG. 2b is a diagram of a structure of an implementation of a camera module shown in FIG. 1;
FIG. 3 is a schematic exploded view of a camera module shown in FIG. 2a;
FIG. 4 is a diagram of a structure of a lens motor shown in FIG. 3 in an implementation,
FIG. 5 is a schematic exploded view of the lens motor shown in FIG. 4;
FIG. 6 is a diagram of a structure of a base and a sliding shaft shown in FIG. 5;
FIG. 7 is a diagram of a partial structure of the lens motor shown in FIG. 5;
FIG. 8 is a diagram of the structure shown in FIG. 7 from another perspective;
FIG. 9 is a diagram of a partial structure of the lens motor shown in FIG. 5;
FIG. 10 is a diagram of the structure shown in FIG. 9 from another perspective;
FIG. 11 is a diagram of a partial structure of the lens motor shown in FIG. 5;
FIG. 12 is a partial sectional view of an implementation of the lens motor shown in FIG. 4 on a B-B line;
FIG. 13 is a schematic exploded view of a mover shown in FIG. 5;
FIG. 14 is a diagram of a structure of a base of the mover shown in FIG. 13;
FIG. 15 is a diagram of the structure shown in FIG. 14 from another perspective;
FIG. 16 is a partial sectional view of an implementation of the lens motor shown in FIG. 4 on a C-C line;
FIG. 17 is a partial sectional view of an implementation of the lens motor shown in FIG. 4 on a D-D line;
FIG. 18 is a diagram of a structure of a first bracket shown in FIG. 13 from another perspective;
FIG. 19 is a diagram of a partial structure of the mover shown in FIG. 13;
FIG. 20 is a diagram of the structure shown in FIG. 19 from another perspective;
FIG. 21 is a diagram of a partial structure of the mover shown in FIG. 13;
FIG. 22 is a partial sectional view of an implementation of the lens motor shown in FIG. 4 on an E-E line;
FIG. 23 is a partial sectional view of an implementation of the lens motor shown in FIG. 4 on a C-C line;
FIG. 24 is a diagram of a structure of a second bracket of the mover shown in FIG. 13 from another perspective;
FIG. 25 is a diagram of a partial structure of the mover shown in FIG. 13;
FIG. 26 is a diagram of a partial structure of the mover shown in FIG. 13;
FIG. 27 is a partial sectional view of an implementation of the lens motor shown in FIG. 4 on an E-E line;
FIG. 28 is a partial sectional view of an implementation of the structure shown in FIG. 4 on a D-D line;
FIG. 29 is a diagram of a structure of the mover shown in FIG. 13;
FIG. 30 is a diagram of a partial structure of the lens motor shown in FIG. 5;
FIG. 31 is a sectional view of an implementation of the lens motor shown in FIG. 4 on an E-E line;
FIG. 32 is a sectional view of an implementation of the lens motor shown in FIG. 4 on an F-F line;
FIG. 33 is a sectional view of an implementation of the lens motor shown in FIG. 4 on a D-D line;
FIG. 34 is a diagram of a structure of the lens motor and a lens shown in FIG. 3;
FIG. 35 is a partial sectional view of an implementation of the camera module shown in FIG. 2b on a G-G line;
FIG. 36 is a sectional view of an implementation of the camera module shown in FIG. 2b on the G-G line;
FIG. 37 is a schematic partial sectional view of another implementation of the camera module shown in FIG. 36; and
FIG. 38 is a schematic partial sectional view of still another implementation of the camera module shown in FIG. 36.

### DESCRIPTION OF EMBODIMENTS

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a nondetachable connection, a direct connection, or an indirect connection through an intermediate medium. A "fastened connection" means that two parts are connected to each other and a relative position relationship remains unchanged after the two parts are connected. "Rotatable connection" means that two parties are connected to each other and can rotate relative to each other after the two parties are connected to each other. "Slidable connection" means that two parties are connected to each other and can slide relative to each other after the two parties are connected to each other. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

It may be understood that the specific embodiments described herein are merely used to explain the related invention, but are not intended to limit the present invention. In addition, it should be further noted that, for ease of description, only a part related to the present invention is shown in the accompanying drawings.

An embodiment of this application provides a terminal. The terminal includes but is not limited to an electronic device having a display function, for example, a mobile phone, a tablet computer, a multimedia player, an e-book reader, a notebook computer, an in-vehicle device, or a wearable device. In this application, specific descriptions are provided by using an example in which the terminal is a mobile phone.

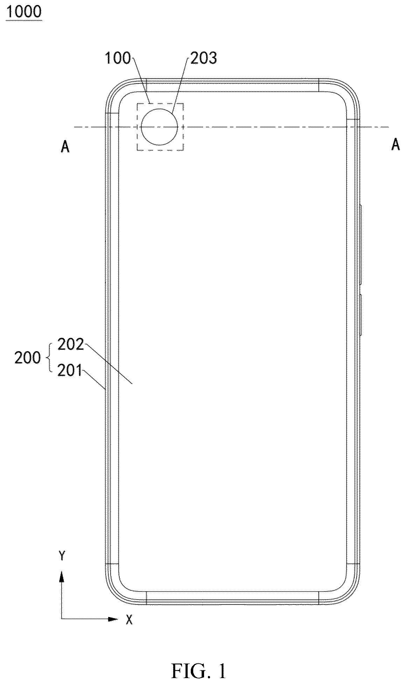

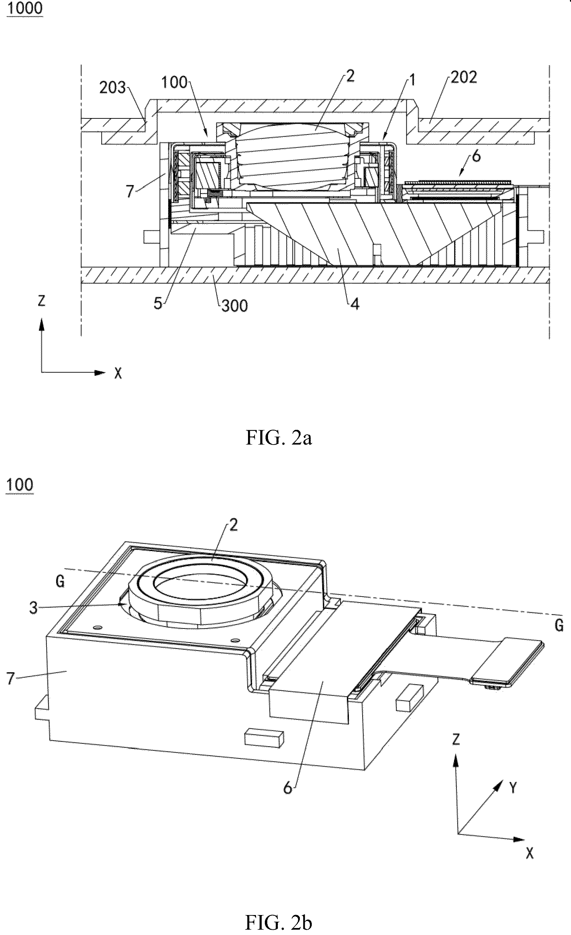

FIG. 1 is a diagram of a structure of an electronic device 1000 according to an embodiment of this application. FIG. 2a is a partial sectional view of an implementation of the electronic device 1000 shown in FIG. 1 on an A-A line.

As shown in FIG. 1 and FIG. 2a, the electronic device 1000 may be a device having a camera module, for example, a mobile phone, a tablet computer (tablet personal computer), a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, or a VR helmet. In the embodiment shown in FIG. 1, descriptions are provided by using an example in which the electronic device 1000 is a mobile phone.

As shown in FIG. 1, the electronic device 1000 may include a camera module 100, a device housing 200, and a screen 300. The camera module 100 may be a rear-facing camera module, or may be a front-facing camera module. It should be noted that FIG. 1 and the following related accompanying drawings show only some components included in the electronic device 1000 as an example. Actual shapes, actual sizes, actual positions, and actual structures of these components are not limited by FIG. 1 and the following accompanying drawings. In addition, when the electronic device 1000 is a device in another form, the electronic device 1000 may not include the screen 300.

For ease of description, a width direction of the electronic device 1000 is defined as an X axis. A length direction of the electronic device 1000 is a Y axis. A thickness direction of the electronic device 1000 is a Z axis. It may be understood that a coordinate system of the electronic device 1000 may be flexibly set based on a specific actual requirement.

In this implementation, the device housing 200 may include a frame 201 and a rear cover 202. The rear cover 202 is fastened to the frame 201. For example, the rear cover 202 may be fastened to the frame 201 through an adhesive. The rear cover 202 and the frame 201 may alternatively be an integrally formed structure, that is, the rear cover 202 and the frame 201 are an integral structure.

In addition, the screen 300 may be located on a side that is of the frame 201 and that is away from the rear cover 202. In this case, the screen and the rear cover 202 are respectively located on two sides of the frame 201. The screen 300, the frame 201, and the rear cover 202 jointly enclose an interior of the electronic device 1000. The inside of the electronic device 1000 may be configured to place a component of the electronic device 1000, for example, a battery, a telephone receiver, or a microphone. The screen 300 may be a flat screen, or may be a curved screen.

For example, the camera module 100 may be located in the inside of the electronic device 1000. The camera module 100 may be fastened to a side that is of the screen 300 and that faces the rear cover 202. The rear cover 202 may be provided with a light transmission hole 203. A shape of the light transmission hole 203 is not limited to a circle shown in FIG. 1. The inside of the electronic device 1000 communicates with the outside of the electronic device 1000 through the light transmission hole 203. Light outside the electronic device 1000 may enter the inside of the electronic device 1000 through the light transmission hole 203. The camera module 100 may collect ambient light that enters the inside of the electronic device 1000.

For example, the camera module 100 may be a common camera module (that is, an optical axis direction of the camera module 100 is the thickness direction of the electronic device 1000). In some implementations, the camera module 100 may alternatively be a periscope camera module (that is, the optical axis direction of the camera module 100 is the width direction of the electronic device 1000).

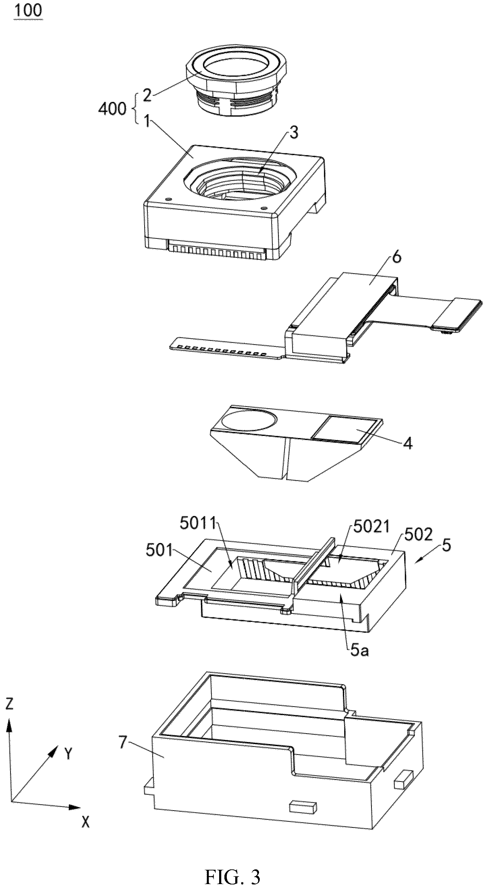

FIG. 2b is a diagram of a structure of an implementation of the camera module 100 shown in FIG. 1. FIG. 3 is a schematic exploded view of the camera module 100 shown in FIG. 2a.

As shown in FIG. 2a and FIG. 2b, the camera module 100 may include a lens motor 1, a lens 2, a prism 4, a module base 5, a circuit module 6, and a module casing 7. The lens motor 1 and the lens 2 may form a lens assembly 400. The lens motor 1 may enclose a mounting hole 3. The lens 2 may be mounted in the mounting hole 3. In another implementation, a manner of mounting the lens 2 and the lens motor 1 is not specifically limited.

It may be understood that the lens motor 1 may control the lens 2 to move in an optical axis direction of the lens 2 (in this implementation, the optical axis direction of the lens 2 is a Z-axis direction), to implement auto focus (auto focus, AF).

In addition, the lens motor 1 may further control the lens 2 to move along a plane perpendicular to the optical axis (in this implementation, the plane perpendicular to the optical axis is an X-Y plane). In this way, when the camera module 100 collects the ambient light, if the electronic device 1000 shakes on the X-Y plane due to an external force, movement of the lens 2 on the X-Y plane may be controlled by using the lens motor 1, to cancel a shake stroke generated by the lens 2 on the X-Y plane, so as to avoid or reduce a position offset caused by the shake of the lens 2. In other words, the camera module 100 in this application may control movement of the lens 2 on the X-Y plane by using the lens motor 1, to implement optical image stabilization (optical image stabilization, OIS) of the camera module 100, and improve imaging quality of the camera module 100.

The foregoing specifically describes the structures of the electronic device 1000 and the camera module 100. The following specifically describes the lens motor 1 in the camera module 100 with reference to related accompanying drawings.

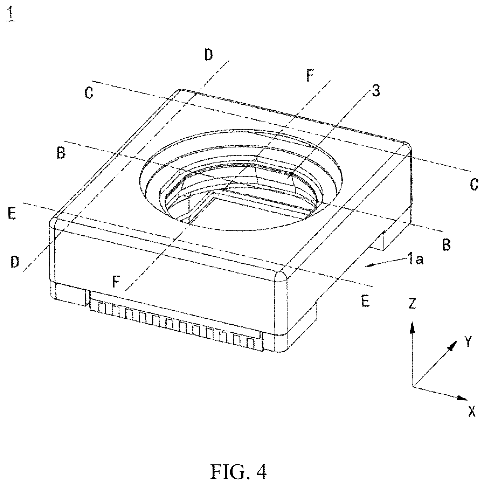

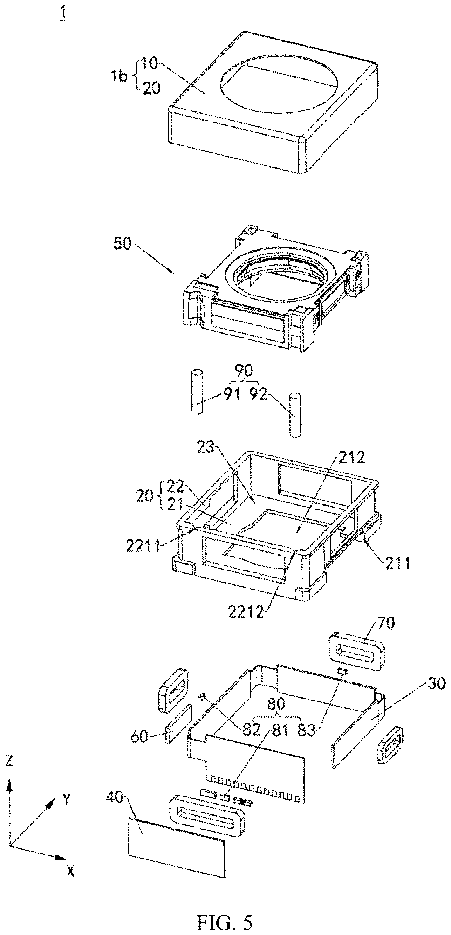

FIG. 4 is a diagram of a structure of the lens motor 1 shown in FIG. 3 in an implementation. FIG. 5 is a schematic exploded view of the lens motor 1 shown in FIG. 4.

As shown in FIG. 4 and FIG. 5, the lens motor 1 may include a casing 10, a base 20, a circuit board 30, a first magnetic attraction sheet 40, a mover 50, a driver chip 60, a coil 70, a position sensor 80, and sliding shafts 90. The casing 10 and the base 20 may jointly form a stator 1b of the lens motor 1. In this implementation, there may be two sliding shafts 90. The two sliding shafts 90 may be a first sliding shaft 91 and a second sliding shaft 92. The first sliding shaft 91 and the second sliding shaft 92 may have a same shape and size. In another implementation, a quantity of the sliding shafts 90 is not specifically limited. Each sliding shaft 90 may also have a different shape and size.

It should be understood that, in this implementation, a width direction of the lens motor 1 is also the width direction of the electronic device 1000, and is an X-axis direction. A length direction of the lens motor 1 is also the length direction of the electronic device 1000, and is a Y-axis direction. A thickness direction of the lens motor 1 is also the thickness direction of the electronic device 1000, and is the Z-axis direction. The Z-axis direction is also a first direction. The X-axis direction is also a second direction. The Y-axis direction is also a third direction. In another implementation, a coordinate system of the lens motor 1 may be flexibly set based on a specific actual requirement.

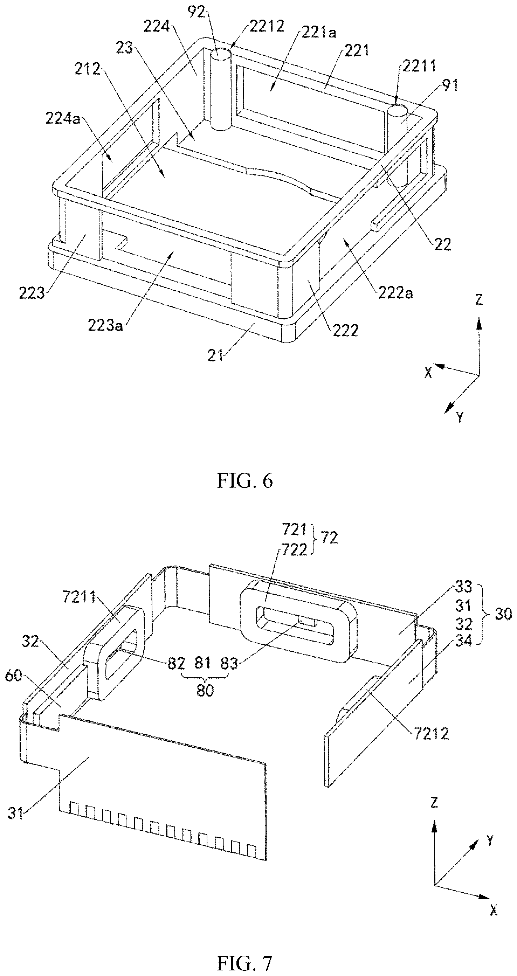

FIG. 6 is a diagram of a structure of the base 20 and the sliding shafts 90 shown in FIG. 5.

As shown in FIG. 5 and FIG. 6, the base 20 may be approximately in a cube shape. The base 20 may include a bottom 21 and a frame portion 22. The frame portion 22 may be fastened to the bottom 21 and enclose an accommodation space 23. The accommodation space 23 may be configured to accommodate the mover 50, the sliding shafts 90, at least a part of the lens 2, and at least a part of the coil 70.

For example, a communicating hole 212 may be provided at the bottom 21. An outside of the lens motor 1 may communicate with the accommodation space 23 through the communicating hole 212. In another implementation, a shape and a size of the communicating hole 212 are not specifically limited.

For example, the frame portion 22 may include a first side portion 222, a second side portion 223, a third side portion 224, and a fourth side portion 221 that are sequentially connected. A first avoidance hole 222a may be provided on the first side portion 222. A second avoidance hole 223a may be provided on the second side portion 223. A third avoidance hole 224a may be provided on the third side portion 224. A fourth avoidance hole 221a may be provided on the fourth side portion 221. The first avoidance hole 222a, the second avoidance hole 223a, the third avoidance hole 224a, and the fourth avoidance hole 221a may all penetrate an inner circumferential side and an outer circumferential side of the frame portion 22, and communicate with the accommodation space 23.

For example, a first avoidance groove 211 may be provided on the base 20. The first avoidance groove 211 may penetrate the bottom 21 and the frame portion 22, and communicates with the communicating hole 212 at the bottom 21. In this case, an inner side surface of the bottom 21 may face the first avoidance groove 211.

For example, a first fastening groove 2211 and a second fastening groove 2212 may be provided on the fourth side portion 221. Both openings of the first fastening groove 2211 and the second fastening groove 2212 may be formed on a surface that is of the fourth side portion 221 and that faces the accommodation space 23. The first fastening groove 2211 and the second fastening groove 2212 may be respectively located on two sides of the fourth avoidance hole 221a. Shapes of both the first fastening groove 2211 and the second fastening groove 2212 may adapt to a shape of the sliding shaft 90. The first sliding shaft 91 may be fastened to the first fastening groove 2211 and connected to the base 20. The second sliding shaft 92 may be fastened to the second fastening groove 2212 and connected to the base 20.

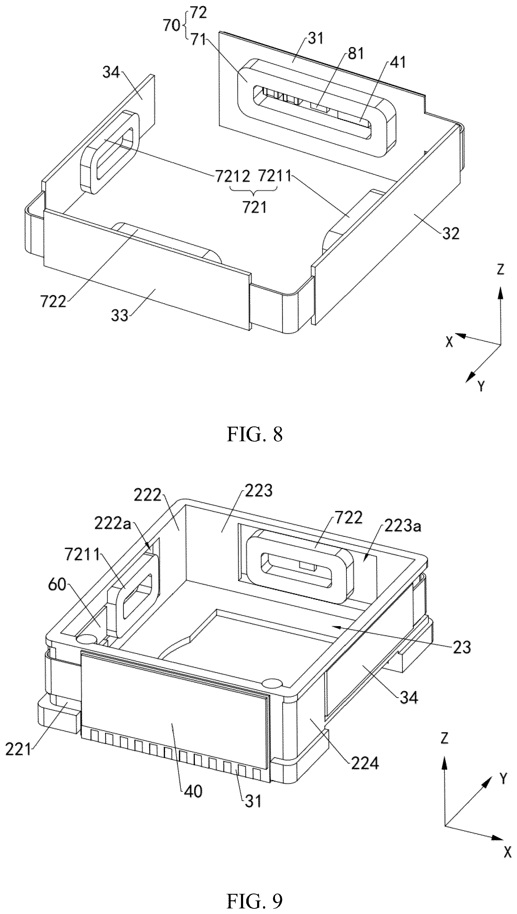

FIG. 7 is a diagram of a partial structure of the lens motor 1 shown in FIG. 5. FIG. 8 is a diagram of the structure shown in FIG. 7 from another perspective.

As shown in FIG. 7 and FIG. 8, both the coil 70 and the position sensor 80 may be fastened to the circuit board 30 in a manner of welding or the like. Both the coil 70 and the position sensor 80 may be electrically connected to the circuit board 30. The circuit board 30 may be a flexible circuit board 30. The position sensor 80 may be a Hall effect sensor. In another implementation, the circuit board 30 may alternatively be a rigid circuit board 30 or a rigid-flexible circuit board 30. The position sensor 80 may alternatively be a sensor of another type.

For example, the circuit board 30 may include a first subboard 31, a second subboard 32, a third subboard 33, and a fourth subboard 34 that are sequentially connected. The first subboard 31 and the third subboard 33 are disposed opposite to each other. The second subboard 32 and the fourth subboard 34 are disposed opposite to each other. The first subboard 31, the second subboard 32, the third subboard 33, and the fourth subboard 34 ma approximately enclose a square. It should be understood that, to facilitate description of a specific structure and shape of the circuit board 30, the circuit board 30 is divided into four parts for description in this implementation, but this does not affect that the circuit board 30 is an integrally formed structure. In another implementation, the first subboard 31, the second subboard 32, the third subboard 33, and the fourth subboard 34 may alternatively be sequentially connected in a welding manner.

For example, the coil 70 may include a focus coil 71 and an image stabilization coil 72. The image stabilization coil 72 may include a first coil 721 and a second coil 722. The first coil 721 may include a first sub-coil 7211 and a second sub-coil 7212. For example, the focus coil 71 may be fastened to a side portion that is of the first subboard 31 and that faces the third subboard 33. The first sub-coil 7211 may be fastened to a side portion that is of the second subboard 32 and that faces the fourth subboard 34. The second coil 722 may be fastened to a side portion that is of the third subboard 33 and that faces the first subboard 31. The second sub-coil 7212 may be fastened to a side portion that is of the fourth subboard 34 and that faces the second subboard 32.

For example, the position sensor 80 may include a first sensor 81, a second sensor 82, and a third sensor 83. The first sensor 81 may be fastened to the first subboard 31. The second sensor 82 may be fastened to the second subboard 32. The third sensor 83 may be fastened to the third subboard 33. For example, the first sensor 81 may be located in a coil hole of the focus coil 71. The second sensor 82 may be located in a coil hole of the first sub-coil 7211. The third sensor 83 may be located in a coil hole of the second coil 722.

In another implementation, the first coil 721 may alternatively not include the second sub-coil 7212.

As shown in FIG. 5 and FIG. 7, the driver chip 60 may be fastened to the second subboard 32 in the welding manner. In this case, the driver chip 60 is electrically connected to the second subboard 32. The driver chip 60 may be electrically connected to both the coil 70 (namely, the focus coil 71, the first sub-coil 7211, the second coil 722, and the second sub-coil 7212) and the position sensor 80 (namely, the first sensor 81, the second sensor 82, and the third sensor 83).

For example, the driver chip 60 may be fastened to a side that is of the second subboard 32 and that faces the fourth subboard 34. In this case, the driver chip 60 and the coil 70 may be located in an area enclosed by the circuit board 30. The driver chip 60 and the coil 70 may be located on a same side of the circuit board 30. For example, the driver chip 60 and the first sub-coil 7211 may be disposed side by side. In another implementation, the driver chip 60 may be further fastened to another position of the circuit board 30.

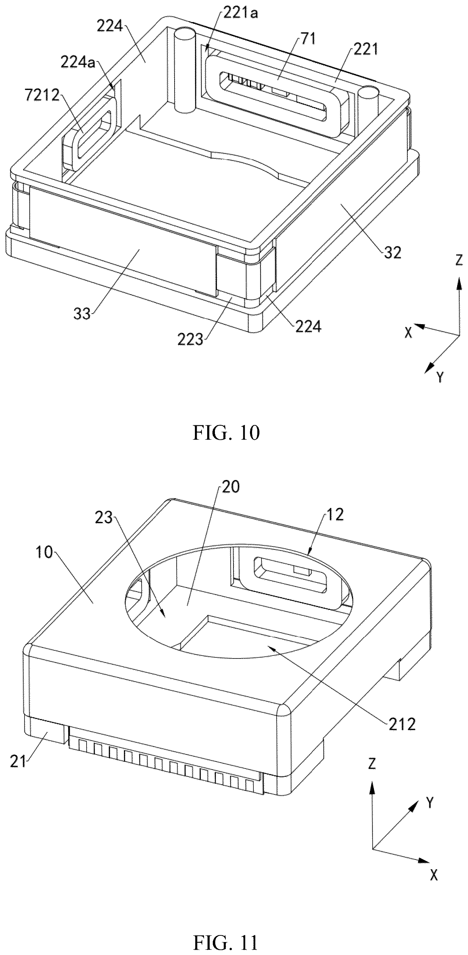

FIG. 9 is a diagram of a partial structure of the lens motor 1 shown in FIG. 5. FIG. 10 is a diagram of the structure shown in FIG. 9 from another perspective.

As shown in FIG. 5, FIG. 9, and FIG. 10, the circuit board 30 may be disposed around the frame portion 22 of the base 20. For example, the circuit board 30 may be disposed around an outer side surface of the frame portion 22. The first subboard 31, the second subboard 32, the third subboard 33, and the fourth subboard 34 may be fastened to the fourth side portion 221, the first side portion 222, the second side portion 223, and the third side portion 224 in sequence. In this case, at least a part of the focus coil 71 may be located in the fourth avoidance hole 221a. At least a part of the first sub-coil 7211 and at least a part of the driver chip 60 may be located in the first avoidance hole 222a. At least a part of the second coil 722 may be located in the second avoidance hole 223a. At least a part of the second sub-coil 7212 may be located in the third avoidance hole 224a. In this way, the circuit board 30 is fastened to an outer circumferential side of the base 20, and the coil 70 (namely, the focus coil 71, the first sub-coil 7211, the second coil 722, and the second sub-coil 7212) is placed in the avoidance hole (namely, the fourth avoidance hole 221a, the first avoidance hole 222a, the second avoidance hole 223a, and the third avoidance hole 224a), so that the coil 70 can be effectively placed by effectively using a thickness size of the base 20. This improves space utilization of the inside of the lens motor 1 and helps miniaturization of the lens motor 1.

For example, the first magnetic attraction sheet 40 may be fastened to a side portion that is of the first subboard 31 and that is away from the accommodation space 23. A material of the first magnetic attraction sheet 40 may be a magnetic material.

In some implementations, a groove (not shown in the figure) may be further provided on the frame portion 22, and the circuit board 30 is mounted in the groove, so that the structure is more compact.

In some implementations, the lens motor 1 may further include a magnetic attraction sub-sheet 41. The magnetic attraction sub-sheet 41 may be fastened to the first subboard 31, and is located in the coil hole of the focus coil 71.

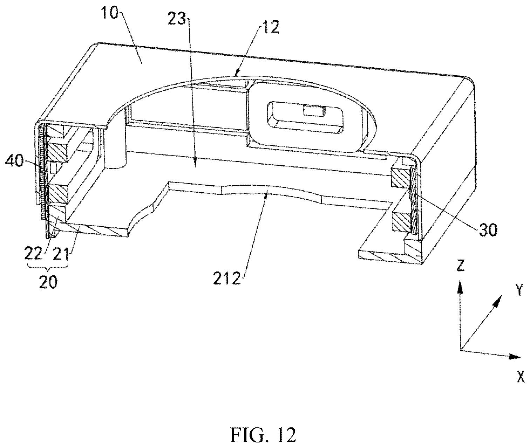

FIG. 11 is a diagram of a partial structure of the lens motor 1 shown in FIG. 5. FIG. 12 is a partial sectional view of an implementation of the lens motor 1 shown in FIG. 4 on a B-B line.

As shown in FIG. 11 and FIG. 12, the casing 10 may be approximately in a cube shape. The casing 10 may be fastened to the bottom 21. The casing 10 is disposed around the frame portion 22 of the base 20. In this case, at least a part of the circuit board 30 and the first magnetic attraction sheet 40 may be located between the casing 10 and the frame portion 22. For example, the casing 10 may be provided with a lens through hole 12. The lens through hole 12 may communicate with the accommodation space 23, and is provided opposite to the communicating hole 212 of the base 20. A shape of the lens through hole 12 may adapt to a shape of the lens 2 (as shown in FIG. 3). For example, the lens 2 may at least partially pass through the lens through hole 12. It should be understood that FIG. 12 shows the bottom 21 and the frame portion 22 of the base 20 by using dashed lines.

The foregoing specifically describes a partial structure of the lens motor 1. The following specifically describes the mover 50 of the lens motor 1 with reference to related accompanying drawings.

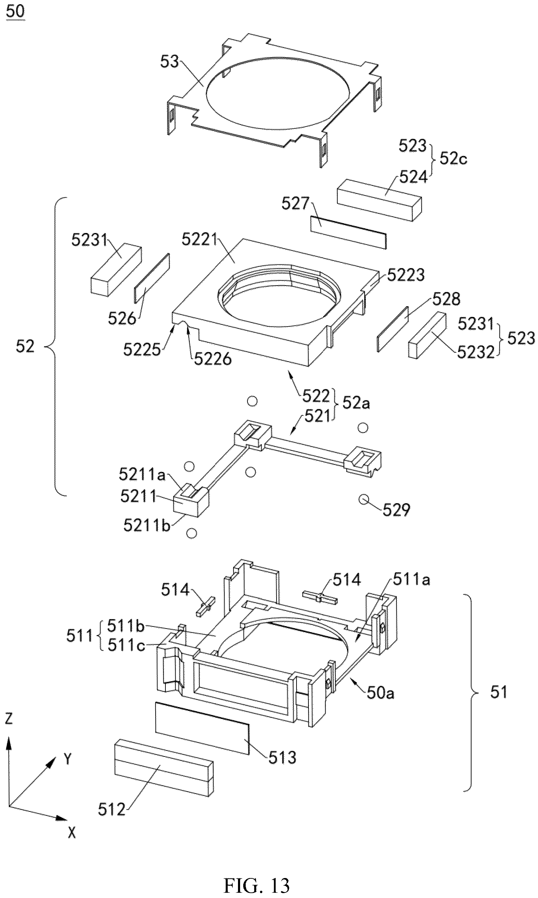

FIG. 13 is a schematic exploded view of the mover 50 shown in FIG. 5.

As shown in FIG. 13, the mover 50 may include a focus mover 51, an image stabilization mover 52, and a cover 53.

For example, the focus mover 51 may include a focus bracket 511, a focus magnetic piece 512, a focus magnetic conductive sheet 513, and a plurality of second magnetic attraction sheets 514. The image stabilization mover 52 may include a first bracket 521, a second bracket 522, an image stabilization magnetic piece 52c, a first magnetic conductive sheet 526, a second magnetic conductive sheet 527, a third magnetic conductive sheet 528, and a plurality of roll balls 529. The first bracket 521 and the second bracket 522 may jointly form the image stabilization bracket 52a of the image stabilization mover 52. The image stabilization magnetic piece 52c may include a first magnetic piece 523 and a second magnetic piece 524. For example, the first magnetic piece 523 may include a first magnetic sub-piece 5231 and a second magnetic sub-piece 5232. The focus mover 51 may be configured to drive the lens 2 to move in the Z-axis direction, to implement optical focus. The image stabilization mover 52 may be configured to drive the lens 2 to move on the X-Y plane, to implement optical image stabilization.

It should be noted that, in this implementation, there are six roll balls 529. The roll balls 529 have the same shape and size. Therefore, each roll ball 529 may use the same reference sign. For brevity of the accompanying drawings, only one of the roll balls 529 is marked in FIG. 13.

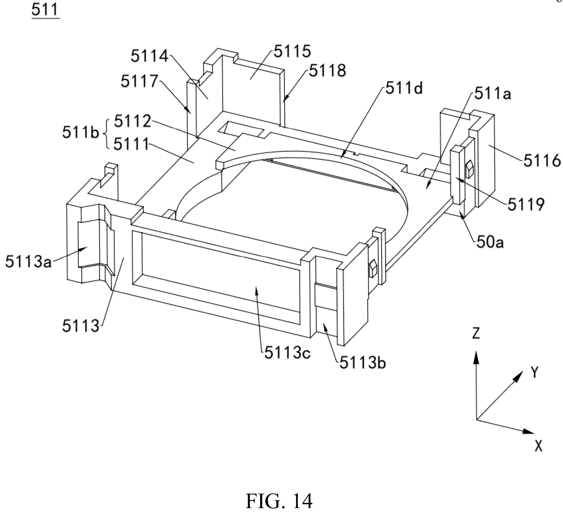

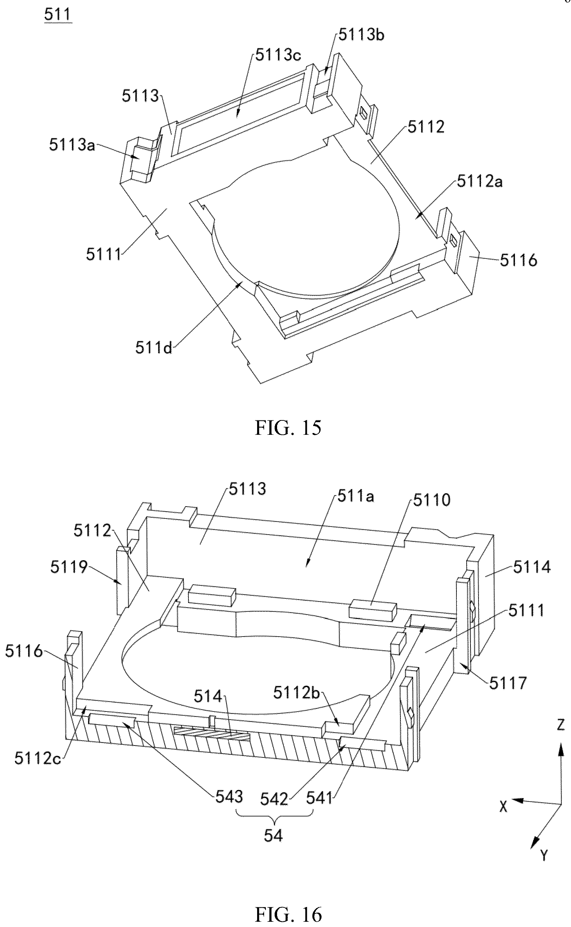

FIG. 14 is a diagram of a structure of the focus bracket 511 of the mover 50 shown in FIG. 13. FIG. 15 is a diagram of the structure shown in FIG. 14 from another perspective.

As shown in FIG. 14 and FIG. 15, the focus bracket 511 may be approximately in a cube shape. The focus bracket 511 may include a bottom 511b and a frame portion 511c. The frame portion 511c may be connected to an outer circumferential edge of the bottom 511b. The frame portion 511c and the bottom 511b may enclose an accommodation space 511a. A first through hole 511d may be provided at the bottom 511b. The first through hole 511d may communicate with the accommodation space 511a.

For example, the bottom 511b may include a first portion 5111 and a second portion 5112. The second portion 5112 may be connected to an upper surface of the first portion 5111, to enclose the first through hole 511d with the first portion 5111. In this case, the second portion 5112 may rise in a Z-axis positive direction relative to the first portion 5111, that is, the second portion 5112 may be stacked on the first portion 5111. The inner side surface of the first portion 5111 may face a bottom space 5112a of the second portion 5112. For example, a second avoidance groove 50a may be provided on the focus bracket 511. The bottom space 5112a of the second portion 5112 may communicate with the first through hole 511d through the second avoidance groove 50a.

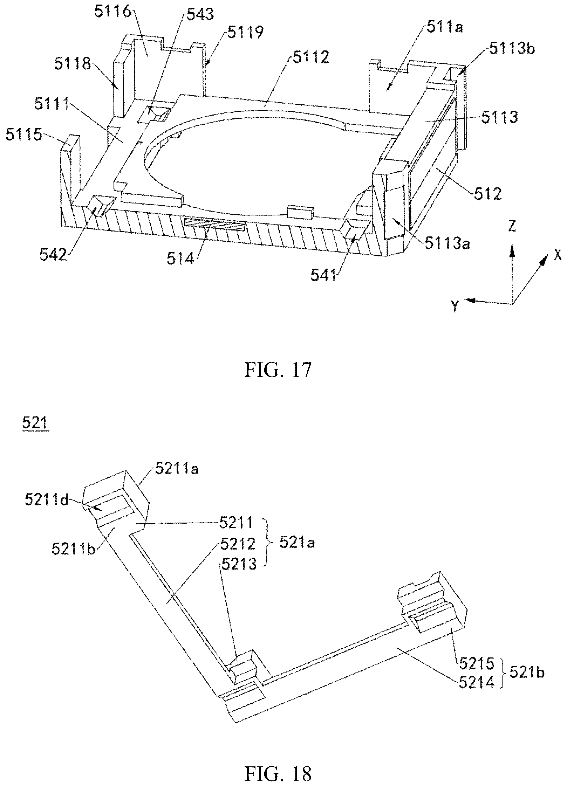

FIG. 16 is a partial sectional view of an implementation of the lens motor 1 shown in FIG. 4 on a C-C line. FIG. 17 is a partial sectional view of an implementation of the lens motor 1 shown in FIG. 4 on a D-D line.

As shown in FIG. 13, FIG. 16, and FIG. 17, the frame portion 511c may include a first side portion 5113, a second side portion 5114, a third side portion 5115, and a fourth side portion 5116 that are sequentially connected. A first avoidance space 5117 may be disposed on the second side portion 5114. A second avoidance space 5118 may be disposed on the third side portion 5115. A third avoidance space 5119 may be disposed on the fourth side portion 5116. The first avoidance space 5117, the second avoidance space 5118, and the third avoidance space 5119 may all communicate with the accommodation space 511a. For example, the second avoidance groove 50a may penetrate the fourth side portion 5116 of the frame portion 511c, and the first portion 5111 is located in the fourth side portion 5116.

For example, a first sliding slot 5113a and a second sliding slot 5113b may be provided on the first side portion 5113. Both openings of the first sliding slot 5113a and the second sliding slot 5113b may be formed on a surface that is of the first side portion 5113 and that is back to the accommodation space 511a. The first sliding slot 5113a may be spaced apart from the second sliding slot 5113b. A base mounting groove 5113c may be provided on the first side portion 5113. The base mounting groove 5113c may be located between the first sliding slot 5113a and the second sliding slot 5113b. The focus magnetic conductive sheet 513 may be fastened to the base mounting groove 5113c. The focus magnetic piece 512 may be fastened to a side portion that is of the focus magnetic conductive sheet 513 and that is away from the accommodation space 511a.

As shown in FIG. 16 and FIG. 17, a plurality of base guide grooves 54 may further be provided on the first portion 5111. Openings of the plurality of base guide grooves 54 may be formed on a surface that is of the first portion 5111 and that faces the accommodation space 511a. In this implementation, there may be three base guide grooves 54. The plurality of base guide grooves 54 may be respectively a first guide groove 541, a second guide groove 542, and a third guide groove 543. For example, the first guide groove 541 may be located at a joint between-the first side portion 5113 and the second side portion 5114. The second guide groove 542 may be located at a joint between the second side portion 5114 and the third side portion 5115. The third guide groove 543 may be located at a joint between the third side portion 5115 and the fourth side portion 5116. All guiding directions of the first guide groove 541, the second guide groove 542, and the third guide groove 543 may be parallel to the X-axis direction. In this case, the first guide groove 541, the second guide groove 542, and the third guide groove 543 may enclose to form an "L" shape.

For example, the focus bracket 511 may further include a distance block 5110. The distance block 5110 may be fastened to the first portion 5111. The distance block 5110 may be located at a joint between the first portion 5111 and the first side portion 5113, and is spaced apart from the first guide groove 541.

For example, a first position-limiting slot 5112b and a second position-limiting slot 5112c may be further provided at the bottom 511b of the focus bracket 511. Both an opening of the first position-limiting slot 5112b and an opening of the second position-limiting slot 5112c may be formed on a surface that is of the second portion 5112 and that is back to the first side portion 5113. The first position-limiting slot 5112b may be spaced apart from the second position-limiting slot 5112c. The first position-limiting slot 5112b may expose the second guide groove 542. The second position-limiting slot 5112c may expose the third guide groove 543.

As shown in FIG. 13, FIG. 16, and FIG. 17, a plurality of second magnetic attraction sheets 514 may be located inside the first portion 5111, that is, the plurality of second magnetic attraction sheets 514 may be disposed inside the first portion 5111. A material of the second magnetic attraction sheet 514 may be a magnetic material. In this implementation, there may be two second magnetic attraction sheets 514. One second magnetic attraction sheet 514 may be located between the first guide groove 541 and the second guide groove 542. The other second magnetic attraction sheet 514 may be located between the second guide groove 542 and the third guide groove 543.

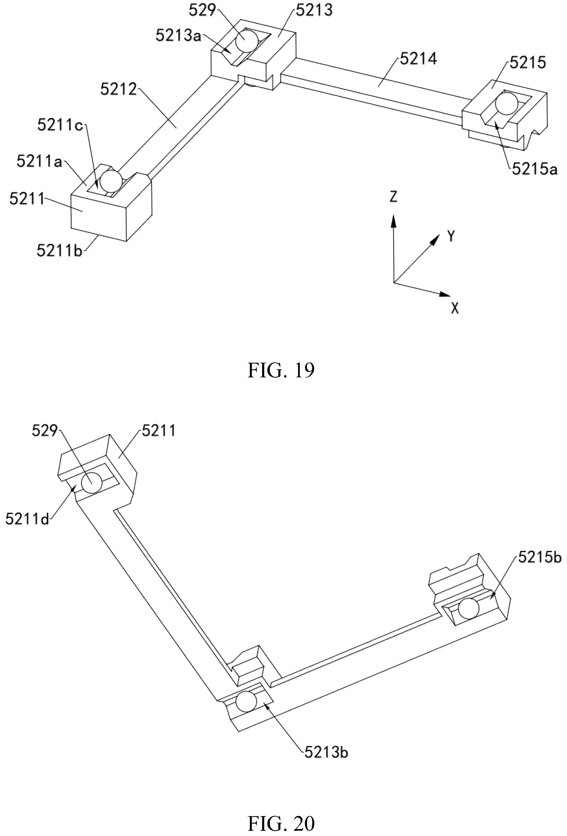

FIG. 18 is a diagram of a structure of the first bracket 521 shown in FIG. 13 from another perspective. FIG. 19 is a diagram of a partial structure of the mover 50 shown in FIG. 13. FIG. 20 is a diagram of the structure shown in FIG. 19 from another perspective.

As shown in FIG. 18 and FIG. 19, the first bracket 521 may include a first branch 521a and a second branch 521b. The first branch 521a is connected to the second branch 521b. The first branch 521a and the second branch 521b may be disposed at an included angle. The angle between the first branch 521a and the second branch 521b may be less than 180°. For example, the angle between the first branch 521a and the second branch 521b may be 90°. In this case, the first bracket 521 may be approximately of an "L"-shaped structure.

For example, the first branch 521a may include a first support portion 5211, a first connection portion 5212, and a second support portion 5213 that are sequentially connected. The second branch 521b may include a second connection portion 5214 and a third support portion 5215 that are sequentially connected. An end that is of the second connection portion 5214 and that is away from the third support portion 5215 may be connected to the second support portion 5213. In other words, the first connection portion 5212 is connected between the first support portion 5211 and the second support portion 5213. The second connection portion 5214 is connected between the second support portion 5213 and the third support portion 5215.

In an implementation, the first connection portion 5212 and the second connection portion 5214 may be disposed at an included angle. For example, the first connection portion 5212 and the second connection portion 5214 may be perpendicular to each other. In this case, the first support portion 5211, the first connection portion 5212, the second support portion 5213, the second connection portion 5214, and the third support portion 5215 may form an "L"-shaped structure.

For example, the first support portion 5211 may have a first end face 5211a and a second end face 5211b that are disposed back to back. A first guide groove 5211c and a second guide groove 5211d may be provided on the first support portion 5211. An opening of the first guide groove 5211c may be formed on the first end face 5211a and a surface that is of the first support portion 5211 and that faces the second support portion 5213. An opening of the second guide groove 5211d may be formed on the second end face 5211b and a surface that is of the first support portion 5211 and that is back to the third support portion 5215. A guiding direction of the first guide groove 5211c may be parallel to the Y axis. A guiding direction of the second guide groove 5211d may be parallel to the X axis.

For example, a third guide groove 5213a and a fourth guide groove 5213b may be provided on the second support portion 5213. A fifth guide groove 5215a and a sixth guide groove 5215b may be provided on the third support portion 5215. It should be understood that structures of the second support portion 5213 and the third support portion 5215 are roughly the same as a structure of the first support portion 5211, and the same part is not described again. The guiding directions of both the third guide groove 5213a and the fifth guide groove 5215a may be parallel to the Y axis. A guiding direction of the fourth guide groove 5213b and a guiding direction of the sixth guide groove 5215b may be parallel to the X-axis direction. For example, the first guide groove 5211c, the third guide groove 5213a, and the fifth guide groove 5215a may all be located on a same side of the first connection portion 5212 and the second connection portion 5214. The second guide groove 5211d, the fourth guide groove 5213b, and the sixth guide groove 5215b may be located on the other side of the first connection portion 5212 and the second connection portion 5214. In another implementation, positions of the first guide groove 5211c and the second guide groove 5211d may be alternatively exchanged.

As shown in FIG. 19 and FIG. 20, in this implementation, there may be six roll balls 529. The plurality of roll balls 529 may be disposed in the first guide groove 5211c, the second guide groove 5211d, the third guide groove 5213a, the fourth guide groove 5213b, the fifth guide groove 5215a, and the sixth guide groove 5215b in a one-to-one correspondence.

For example, the first guide groove 5211c, the third guide groove 5213a, the fourth guide groove 5213b, and the sixth guide groove 5215b may be "V"-shaped grooves, that is, cross sectional shapes of the first guide groove 5211c, the third guide groove 5213a, the fourth guide groove 5213b, and the sixth guide groove 5215b are "V"-shaped. In this case, the roll balls 529 may be tightly fitted with the first guide groove 5211c, the third guide groove 5213a, the fourth guide groove 5213b, and the sixth guide groove 5215b. The second guide groove 5211d and the fifth guide groove 5215a may be "U"-shaped grooves, that is, a cross section shape of the second guide groove 5211d and the fifth guide groove 5215a is "U"-shaped. In this case, loose matching may be implemented between the roll ball 529 and the second guide groove 5211d and between the roll ball and the fifth guide groove 5215a.

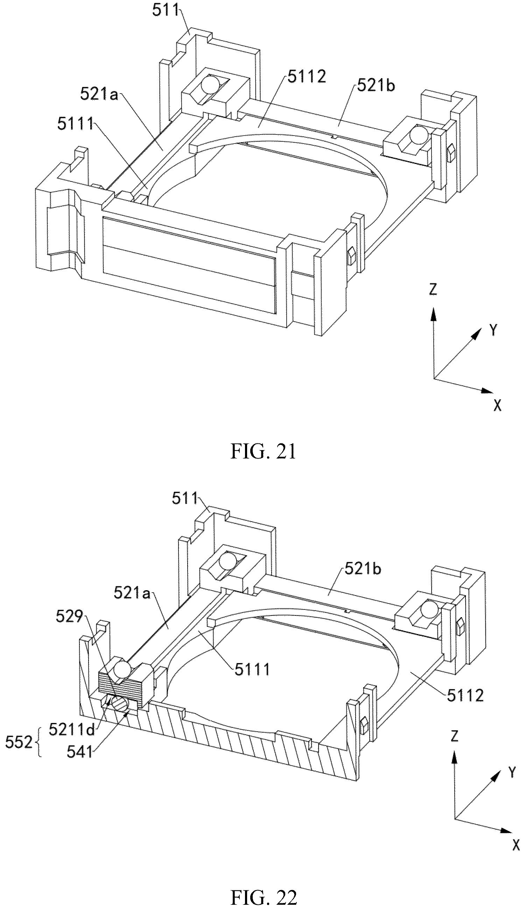

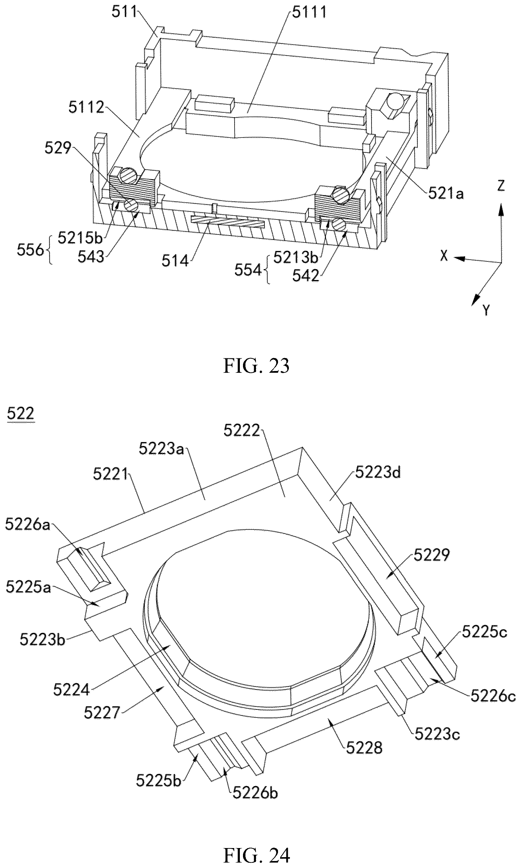

FIG. 21 is a diagram of a partial structure of the mover 50 shown in FIG. 13. FIG. 22 is a partial sectional view of an implementation of the lens motor 1 shown in FIG. 4 on an E-E line. FIG. 23 is a partial sectional view of an implementation of the lens motor 1 shown in FIG. 4 on a C-C line.

As shown in FIG. 21 to FIG. 23, the first bracket 521 may be slidably connected to the first portion 5111 of the focus bracket 511 through the roll balls 529. In this case, a part of the second portion 5112 of the focus bracket 511 may be disposed opposite to the first branch 521a of the first bracket 521, and another part of the second portion 5112 may be disposed opposite to the second branch 521b.

For example, an opening of the second guide groove 5211d of the first bracket 521 and an opening of the first guide groove 541 of the focus bracket 511 may be provided opposite to each other, and jointly form a second roll ball groove 552. An opening of the fourth guide groove 5213b of the first bracket 521 and an opening of the second guide groove 542 of the focus bracket 511 may be provided opposite to each other, and jointly form a fourth roll ball groove 554. An opening of the sixth guide groove 5215b of the first bracket 521 and an opening of the third guide groove 543 of the focus bracket 511 may be provided opposite to each other, and jointly form a sixth roll ball groove 556.

All guiding directions of the second roll ball groove 552, the fourth roll ball groove 554, and the sixth roll ball groove 556 may be parallel to the X-axis direction. The roll balls 529 between the first bracket 521 and the focus bracket 511 may move in the X-axis direction. In other-words, the first bracket 521 may move relative to the focus bracket 511 in the X-axis direction.

In some implementations, the bottom 511b may alternatively not include the second portion 5112. The first bracket 521 may further include a third connection portion (not shown in the figure) and a fourth support portion (not shown in the figure). The third connection portion may be connected to the third support portion 5215, and is parallel to the first connection portion 5212. The fourth support portion may be connected to an end that is of the third connection portion and that is away from the third support portion 5215. A seventh guide groove and an eighth guide groove may be further provided on the fourth support portion. A guiding direction of the seventh guide groove may be parallel to the Y axis. A guiding direction of the eighth guide groove may be parallel to the X axis.

FIG. 24 is a diagram of a structure of the second bracket 522 of the mover 50 shown in FIG. 13 from another perspective.

As shown in FIG. 13 and FIG. 24, the second bracket 522 may be approximately in a cube shape. The second bracket 522 may include a first surface 5221 and a second surface 5222 that are disposed back to back, and a circumferential side surface 5223 that connects outer circumferential edges of the first surface 5221 and the second surface 5222. A second through hole 5224 may be provided on the second bracket 522. The second through hole 5224 may sequentially penetrate the first surface 5221 and the second surface 5222. The second through hole 5224 may form at least a part of the mounting hole 3 of the lens motor 1. For example, the lens 2 (refer to FIG. 3) may be mounted on the second bracket 522 through the second through hole 5224.

For example, the circumferential side surface 5223 of the second bracket 522 may include a first side surface 5223a, a second side surface 5223b, a third side surface 5223c, and a fourth side surface 5223d. A plurality of accommodation grooves 5225 may be provided on the second bracket 522. All the plurality of accommodation grooves 5225 may communicate with the second surface 5222 and the circumferential side surface 5223 of the second bracket 522. In this implementation, there may be three accommodation grooves 5225. The plurality of accommodation grooves 5225 may be a first accommodation groove 5225a, a second accommodation groove 5225b, and a third accommodation groove 5225c.

For example, the first accommodation groove 5225a may communicate with the first side surface 5223a, the second side surface 5223b, and the second surface 5222 of the second bracket 522. The second accommodation groove 5225b may communicate with the second side surface 5223b, the third side surface 5223c, and the second surface 5222 of the second bracket 522. The third accommodation groove 5225c may communicate with the third side surface 5223c, the fourth side surface 5223d, and the second surface 5222 of the second bracket 522.

For example, the second bracket 522 may further be provided with a plurality of guide grooves 5226. All the plurality of guide grooves 5226 may communicate with the circumferential side surface 5223 of the second bracket 522 and the accommodation grooves 5225. In this implementation, there may be three guide grooves 5226 of the second bracket 522. The plurality of guide grooves 5226 may be a first guide groove 5226a, a second guide groove 5226b, and a third guide groove 5226c. The first guide groove 5226a may communicate with the first accommodation groove 5225a and the first side surface 5223a. The second guide groove 5226b may communicate with the second accommodation groove 5225b and the third side surface 5223c. The third guide groove 5226c may communicate with the third accommodation groove 5225c and the third side surface 5223c. In this case, guiding directions of the plurality of guide grooves 5226 (namely, the first guide groove 5226a, the second guide groove 5226b, and the third guide groove 5226c) of the second bracket 522 may be parallel to the Y-axis direction.

In some implementations, a fourth accommodation groove (not shown in the figure) may be further provided on the second bracket 522. The fourth accommodation groove may communicate with the first side surface 5223a, the fourth side surface 5223d, and the second surface 5222 of the second bracket 522. A fourth guide groove (not shown in the figure) may be further provided on the second bracket 522. The fourth guide groove may communicate with the fourth accommodation groove and the first side surface 5223a. A guiding direction of the fourth guide groove may be parallel to the Y-axis direction.

In another implementation, the second bracket 522 may not be provided with the accommodation groove 5225. In this case, the guide groove 5226 of the second bracket 522 may communicate with the circumferential side surface 5223 and the second surface 5222 of the second bracket 522.

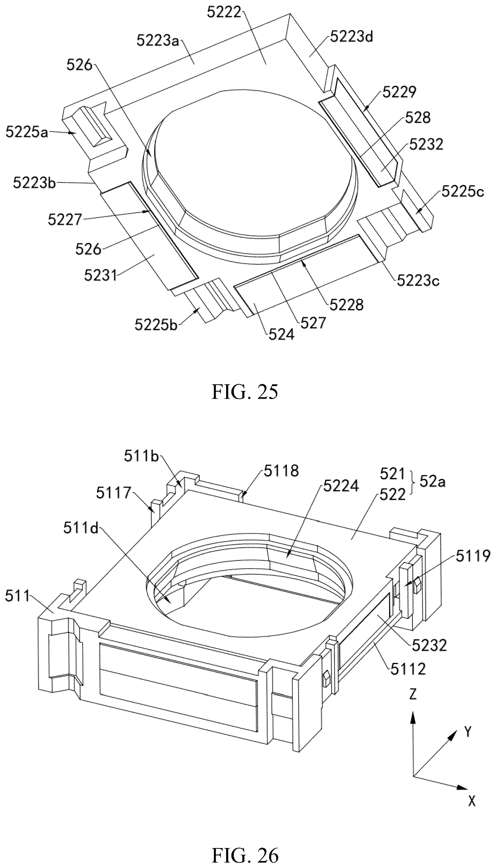

FIG. 25 is a diagram of a partial structure of the mover 50 shown in FIG. 13.

As shown in FIG. 24 and FIG. 25, the second bracket 522 may be provided with a first mounting groove 5227, a second mounting groove 5228, and a third mounting groove 5229. The first mounting groove 5227 may be located between the first accommodation groove 5225a and the second accommodation groove 5225b. The second mounting groove 5228 may be located between the second accommodation groove 5225b and the third accommodation groove 5225c. The third mounting groove 5229 and the third accommodation groove 5225c may be provided side by side in the Y-axis direction.

For example, an opening of the first mounting groove 5227 may be formed on the second side surface 5223b and the second surface 5222. An opening of the second mounting groove 5228 may be formed on the third side surface 5223c and the second surface 5222. An opening of the third mounting groove 5229 may be formed on the fourth side surface 5223d and the second surface 5222. The first magnetic conductive sheet 526 may be fastened to a groove wall that is of the first mounting groove 5227 and that is close to the second through hole 5224. The first magnetic sub-piece 5231 may be fastened to a side portion that is of the first magnetic conductive sheet 526 and that is away from the second through hole 5224. A connection relationship among the second mounting groove 5228, the second magnetic piece 524, and the second magnetic conductive sheet 527 and a connection relationship among the third mounting groove 5229, the second magnetic sub-piece 5232, and the third magnetic conductive sheet 528 are approximately the same as a connection relationship among the first mounting groove 5227, the first magnetic sub-piece 5231, and the first magnetic conductive sheet 526. The same part is not described again.

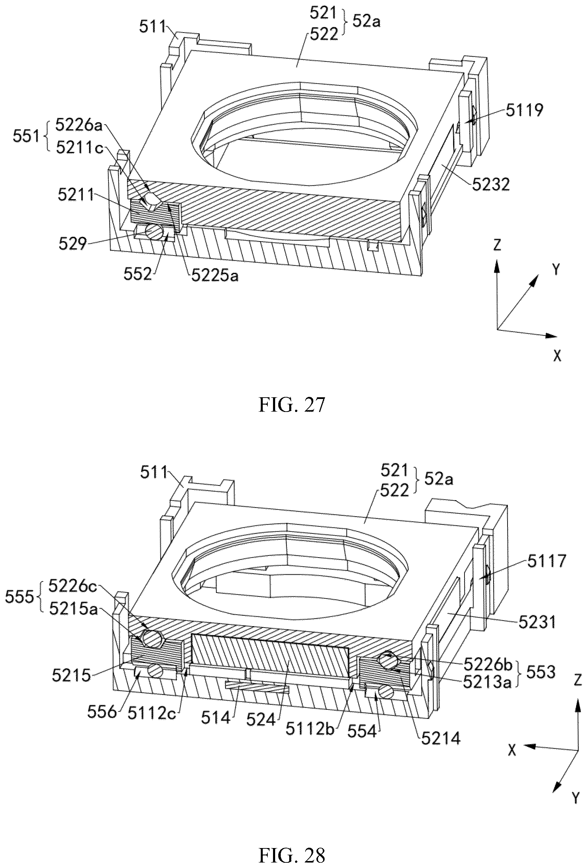

FIG. 26 is a diagram of a partial structure of the mover 50 shown in FIG. 13. FIG. 27 is a partial sectional view of an implementation of the lens motor 1 shown in FIG. 4 on an E-E line. FIG. 28 is a partial sectional view of an implementation of the structure shown in FIG. 4 on a D-D line.

As shown in FIG. 26 to FIG. 28, a part of the second bracket 522 may be movably connected to the first bracket 521 through the roll balls 529. Another part of the second bracket 522 may be disposed opposite to the second portion 5112 of the focus bracket 511. In this case, both the first bracket 521 and the second bracket 522 may be located in the accommodation space 511a of the focus bracket 511. In other words, the image stabilization bracket 52a may be located on an inner side of the focus bracket 511.

For example, the first through hole 511d and the second through hole 5224 may be provided opposite to each other. The first avoidance space 5117, the second avoidance space 5118, and the third avoidance space 5119 of the focus bracket 511 may respectively expose the first magnetic sub-piece 5231, the second magnetic piece 524, and the second magnetic sub-piece 5232 that are fastened to the second bracket 522. In this case, the second magnetic attraction sheet 514 located between the first guide groove 541 and the second guide groove 542 of the focus bracket 511 may be adsorbed to the first magnetic sub-piece 5231. The second magnetic attraction sheet 514 located between the second guide groove 542 and the third guide groove 543 of the focus bracket 511 may be adsorbed to the second magnetic piece 524.

For example, at least a part of the first support portion 5211 may be accommodated in the first accommodation groove 5225a. At least a part of the second support portion 5213 may be accommodated in the second accommodation groove 5225b. At least a part of the third support portion 5215 may be accommodated in the third accommodation groove 5225c. In this case, an opening of the first guide groove 5226a of the second bracket 522 and an opening of the first guide groove 5211c of the first bracket 521 may be provided opposite to each other, and jointly form the first roll ball groove 551. An opening of the second guide groove 5226b of the second bracket 522 and an opening of the third guide groove 5213a of the first bracket 521 may be provided opposite to each other, and jointly form the third roll ball groove 553. An opening of the third guide groove 5226c of the second bracket 522 and an opening of the fifth guide groove 5215a of the first bracket 521 may be provided opposite to each other, and jointly form the fifth roll ball groove 555. In this case, the first roll ball groove 551, the second roll ball groove 552, the third roll ball groove 553, the fourth roll ball groove 554, the fifth roll ball groove 555, and the sixth roll ball groove 556 may jointly form a roll ball groove of the mover 50.

All guiding directions of the first roll ball groove 551, the third roll ball groove 553, and the fifth roll ball groove 555 may be parallel to a Y-axis direction. The roll balls 529 between the second bracket 522 and the first bracket 521 may move in the Y-axis direction. In other words, the second bracket 522 may move relative to the first bracket 521 in the Y-axis direction.

It may be understood that the second bracket 522 in this implementation may be movably connected to the first bracket 521 by using the roll balls 529. The second bracket 522 may move relative to the first bracket 521 in the Y-axis direction. When the second bracket 522 moves in a Y-axis positive direction relative to the first bracket 521, a groove wall that is of the second accommodation groove 5225b and that is close to the first mounting groove 5227 may move in a direction close to the second support portion 5213, until the groove wall presses against the second support portion 5213. When the second bracket 522 moves in a Y-axis negative direction relative to the first bracket 521, a groove wall that is of the first accommodation groove 5225a and that is close to the first mounting groove 5227 may move in a direction close to the first support portion 5211 until the groove wall presses against the first support portion 5211. In this way, through cooperation between the groove wall of the first accommodation groove 5225a and the first support portion 5211 and cooperation between the groove wall of the second accommodation groove 5225b and the second support portion 5213, the second bracket 522 can be prevented from being detached from the first bracket 521 in a moving process, and the roll balls 529 between the second bracket 522 and the first bracket 521 can be prevented from being detached from the roll ball groove.

In another implementation, only the first bracket 521 may be movably connected to the focus bracket 511 through the roll balls 529. Alternatively, only the second bracket 522 is movably connected to the first bracket 521 through the roll balls 529.

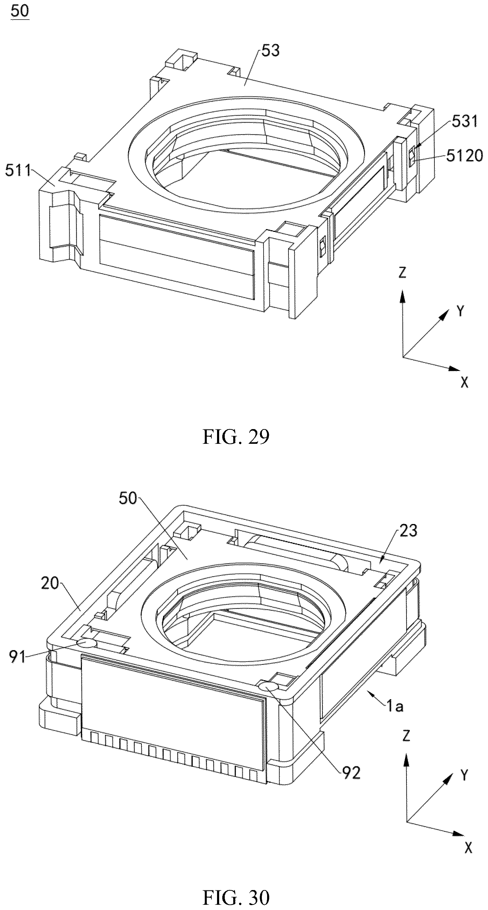

FIG. 29 is a diagram of a structure of the mover 50 shown in FIG. 13.

As shown in FIG. 26 and FIG. 29, the cover 53 may cover the focus bracket 511. In this case, the cover 53 may be located on a side that is of the image stabilization bracket 52a and that is away from the focus bracket 511. The image stabilization mover 52 may be located between the focus bracket 511 and the cover 53. For example, a plurality of fastening grooves 531 may be provided on the cover 53. A plurality of fastening protrusions 5120 may be disposed on the focus bracket 511. The plurality of fastening grooves 531 may cooperate with the plurality of fastening protrusions 5120 in a one-to-one correspondence, to fasten the cover 53 to the focus bracket 511.

It may be understood that in this implementation, the first bracket 521 may be movably connected to the focus bracket 511 through the roll balls 529, and drive the second bracket 522 to move relative to the focus bracket 511 in the X-axis direction, so that the image stabilization mover 52 may move relative to the focus mover 51 in the X-axis direction. When the first bracket 521 moves in an X-axis positive direction relative to the focus bracket 511, the first support portion 5211 may move in a direction toward the distance block 5110 until the first support portion 5211 presses against the distance block 5110. The third support portion 5215 may move in a direction toward the first position-limiting slot 5112b until the third support portion 5215 presses against a groove wall of the second position-limiting slot 5112c. When a rolling support moves in an X-axis negative direction relative to the focus bracket 511, the second support portion 5213 may move in a direction close to the second position-limiting slot 5112c until the second support portion 5213 presses against a groove wall of the first position-limiting slot 5112b. In this way, through cooperation between the first support portion 5211 and the distance block 5110, cooperation between the second support portion 5213 and the first position-limiting slot 5112b, and cooperation between the third support portion 5215 and the second position-limiting slot 5112c, the roll balls 529 between the first bracket 521 and the focus bracket 511 can be prevented from being detached from the roll ball groove.

In addition, in this implementation, by using an adsorption force between the first magnetic sub-piece 5231 and one of the second magnetic attraction sheets 514, and an adsorption force between the second magnetic piece 524 and the other second magnetic attraction sheet 514, the image stabilization mover 52 can squeeze the focus bracket 511 of the focus mover 51 in the Z-axis direction under an action of the adsorption forces. In this case, the plurality of roll balls 529 may be closely attached to groove walls of the plurality of roll ball grooves in a one-to-one correspondence. In this way, the image stabilization mover 52 can be effectively prevented from being overturned when moving on the X-Y plane.

In addition, in this implementation, the cover 53 is disposed to cover the focus bracket 511, so that the focus mover 51 can completely cover the image stabilization mover 52. In this way, when the electronic device 1000 is turned over and tilted, the image stabilization mover 52 in the lens motor 1 can be effectively prevented from being detached from the focus mover 51.

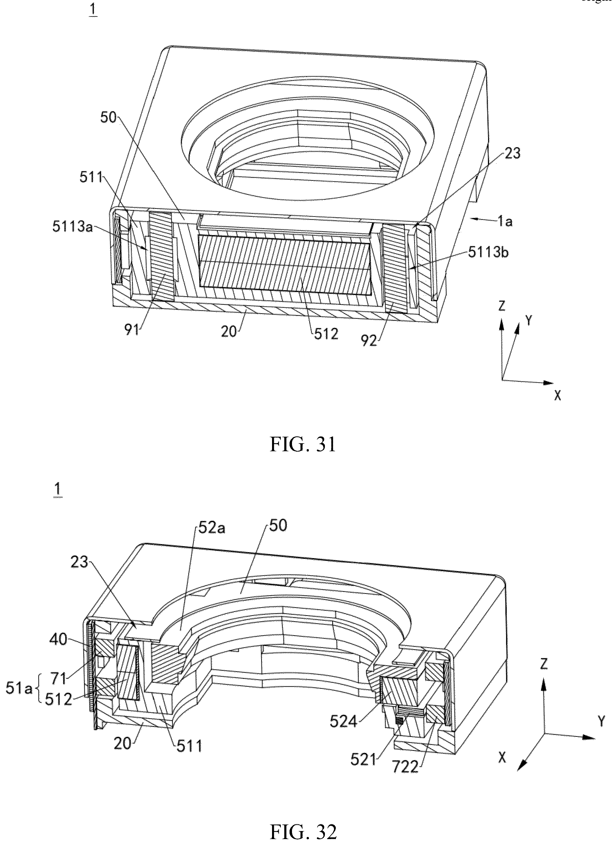

FIG. 30 is a diagram of a partial structure of the lens motor 1 shown in FIG. 5. FIG. 31 is a sectional view of an implementation of the lens motor 1 shown in FIG. 4 on an E-E line. FIG. 32 is a sectional view of an implementation of the lens motor 1 shown in FIG. 4 on an F-F line.

As shown in FIG. 30 to FIG. 32, the mover 50 may be mounted in the accommodation space 23 of the base 20. The first sliding slot 5113a of the focus bracket 511 may cooperate with the first sliding shaft 91. The second sliding slot 5113b of the focus bracket 511 may cooperate with the second sliding shaft 92. In this case, the focus bracket 511 may move relative to the base 20 in an axial direction of the first sliding shaft 91. In this implementation, the axial direction of the first sliding shaft 91 is the Z-axis direction. In other words, the mover 50 may move relative to the base 20 in the Z-axis direction.

For example, the first magnetic attraction sheet 40 may be adsorbed to the focus magnetic piece 512. In this case, the focus bracket 511 may squeeze the first sliding shaft 91 and the second sliding shaft 92 in the Y-axis direction under an action of an adsorption force between the first magnetic attraction sheet 40 and the focus magnetic piece 512, so that the first sliding shaft 91 may be closely attached to the first sliding slot 5113a, and the second sliding shaft 92 may be closely attached to the second sliding slot 5113b. In this way, the mover 50 can be effectively prevented from tilting when moving relative to the base 20 in the Z-axis direction.

In some implementations, the magnetic attraction sub-sheet 41 (refer to FIG. 8) may also be adsorbed to the focus magnetic piece 512. In this way, the magnetic attraction sub-sheet 41 and the first magnetic attraction sheet 40 may be co-adsorption of the focus magnetic piece 512, to enhance the adsorption force of the first magnetic attraction sheet 40 on the focus magnetic piece 512. In addition, the magnetic attraction sub-sheet 41 may be further configured to balance a Z-axis direction interference force generated by the first magnetic attraction sheet 40.

In another implementation, the sliding shaft 90 may be replaced with a plurality of roll balls.

As shown in FIG. 5, FIG. 31, and FIG. 32, the first sensor 81 may be configured to detect magnetic field intensity presented when the focus magnetic piece 512 is located in different positions, to detect a position of the focus bracket 511. The second sensor 82 may be configured to detect magnetic field intensity presented when the first magnetic sub-piece 5231 is located in different positions, to detect a position of the image stabilization bracket 52a in the X-axis direction. The third sensor 83 may be configured to detect magnetic field intensity presented when the second magnetic piece 524 is located in different positions, to detect a position of the image stabilization bracket 52a in the Y-axis direction. The driver chip 60 may simultaneously obtain information about the first sensor 81, the second sensor 82, and the third sensor 83.

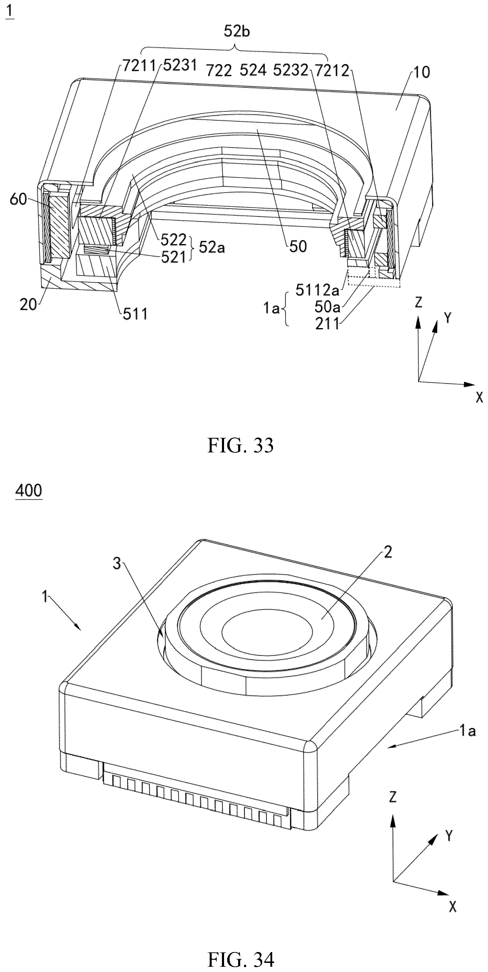

FIG. 33 is a sectional view of an implementation of the lens motor 1 shown in FIG. 4 on a D-D line. FIG. 34 is a diagram of a structure of the lens motor 1 and the lens 2 shown in FIG. 3.

As shown in FIG. 31 and FIG. 33, through the first avoidance groove 211 of the base 20, the second avoidance groove 50a of the focus bracket 511 may communicate with the bottom space 5112a of the second portion 5112 (FIG. 14 shows the second avoidance groove 50a from another perspective, and FIG. 15 shows the bottom space 5112a from another perspective). In this case, the first avoidance groove 211, the second avoidance groove 50a, and the bottom space 5112a of the second portion 5112 may jointly form a mounting space 1a of the lens motor 1. The mounting space 1a may be configured to accommodate at least another part of the lens or the prism of the camera module 100. It should be understood that FIG. 33 shows, by using dashed lines, the first avoidance groove 211, the second avoidance groove 50a, and the bottom space 5112a of the second portion 5112.

As shown in FIG. 32 to FIG. 34, the focus coil 71 may be disposed opposite to the focus magnetic piece 512. In this case, the focus coil 71 and the focus magnetic piece 512 may jointly form a focus driving mechanism 51a of the focus mover 51. The first sub-coil 7211 may be disposed opposite to the first magnetic sub-piece 5231. The second coil 722 may be disposed opposite to the second magnetic piece 524. The second sub-coil 7212 may be disposed opposite to the second magnetic sub-piece 5232. In this case, the first sub-coil 7211, the second coil 722, the second sub-coil 7212, the first magnetic sub-piece 5231, the second magnetic piece 524, and the second magnetic sub-piece 5232 may jointly form an image stabilization driving mechanism 52b of the image stabilization mover 52.

When a signal is applied to the focus coil 71, the focus magnetic piece 512 may cooperate with the focus coil 71, to drive the focus bracket 511 and drive the first bracket 521 and the second bracket 522 (namely, the image stabilization bracket 52a) to move relative to the base 20 in the Z-axis direction. In other words, the lens 2 may move relative to the base 20 in the Z-axis direction under an action of the mover 50, to implement an automatic focus function.

When a signal is applied to the first sub-coil 7211 and the second sub-coil 7212, the first magnetic sub-piece 5231 may cooperate with the first sub-coil 7211, and the second magnetic sub-piece 5232 may cooperate with the second sub-coil 7212, to drive the first bracket 521 and drive the second bracket 522 to move relative to the focus bracket 511 in the X-axis direction. In other words, the second bracket 522 moves relative to the base 20 in the X-axis direction. When a signal is applied to the second coil 722, the second magnetic piece 524 may cooperate with the second coil 722, to drive the second bracket 522 to move relative to the first bracket 521 in the Y-axis direction. In other words, the second bracket 522 moves relative to the base 20 in the Y-axis direction. In other words, the lens 2 may move relative to the base 20 on the X-Y plane under an action of the mover 50, to implement an optical image stabilization function.

The driving force generated through cooperation between the focus magnetic piece 512 and the focus coil 71 is a Z-direction driving force of the mover 50. The Z-direction driving force may be greater than a sum of overall gravity of the mover 50 and the lens 2, a friction force between the focus bracket 511 and the first sliding shaft 91 and the second sliding shaft 92, an adsorption force between the magnetic attraction sub-sheet 41 (refer to FIG. 8) and the focus magnetic piece 512, and an adsorption force between the first magnetic attraction sheet 40 and the focus magnetic piece 512. A sum of a driving force generated through cooperation between the first magnetic sub-piece 5231 and the first sub-coil 7211 and a driving force generated through cooperation between the second magnetic sub-piece 5232 and the second sub-coil 7212 is an X-direction driving force of the mover 50. The X-direction driving force may be greater than a sum of overall gravity of the image stabilization mover 52 and the lens 2 and a friction force between the first bracket 521 and the focus bracket 511. A driving force generated through cooperation between the second magnetic piece 524 and the second coil 722 is a Y-direction driving force of the mover 50. The Y-direction driving force may be greater than a sum of overall gravity of the second bracket 522 and the lens 2 and a friction force between the second bracket 522 and the first bracket 521.

It may be understood that, the lens motor 1 in this implementation includes the driver chip 60, the image stabilization mover 52, and the focus mover 51. The image stabilization bracket 52a may be located in the accommodation space 511d of the focus bracket 511. The lens 2 may be mounted on the image stabilization bracket 52a. The driver chip 60 may control the focus driving mechanism 51a, so that the focus driving mechanism 51a drives the focus bracket 511 to drive the image stabilization bracket 52a to move relative to the base 20 in the Z-axis direction. The driver chip 60 may further control the image stabilization driving mechanism 52b, so that the first bracket 521 drives the second bracket 522 to move relative to the base 20 in the X-axis direction, and the second bracket 522 moves relative to the base 20 in the Y-axis direction. In this way, when the lens 2 is mounted on the second through hole 5224 of the second bracket 522, the second bracket 522 is controlled to move in the Z-axis direction and on the X-Y plane relative to the base 20, so that the lens 2 can be driven to move in the Z-axis direction and on the X-Y plane relative to the base 20.

In other words, the lens motor 1 in this implementation is an integrated motor that has both an image stabilization function and a focus function, and the driver chip 60 is built in the lens motor 1. In this way, the driver chip inside the lens motor 1 may simultaneously control the second bracket 522 to move relative to the base 20 in the Z-axis direction to implement the focus function, and control the second bracket 522 to move relative to the base 20 on the X-Y plane to implement the image stabilization function. Compared with a split lens motor 1 in which the image stabilization mover 52 and the focus mover 51 are separately disposed, the lens motor 1 in this implementation has a smaller size, which helps reduce a stacking size of the camera module 100 and simplify a process, and further helps save an internal space of the electronic device 1000. In addition, compared with the lens motor 1 that needs the plurality of driver chips 60 to separately control the image stabilization mover 52 and the focus mover 51, the lens motor 1 in this implementation controls both the image stabilization driving mechanism 52b of the image stabilization mover 52 and the focus driving mechanism 51a of the focus mover 51 by using one driver chip 60. When one of the image stabilization mover 52 and the focus mover 51 needs to obtain position information of the other, the driver chip 60 may perform corresponding algorithm compensation to obtain the corresponding position information. In this way, information exchange between the image stabilization mover 52 and the focus mover 51 is faster, and the driver chip 60 does not need to perform additional data burning, which helps improve efficiency of obtaining position information by the driver chip 60 and improve a response speed of the lens motor 1.

In addition, a conventional driver chip 60 of the lens motor 1 is usually disposed on a circuit board outside the lens motor 1. Therefore, in a production process of the camera module 100, related calibration data (for example, calibration data of the position sensor 80, linearity calibration data, and calibration data of crosstalk caused by the focus mover 51 to the image stabilization mover 52) cannot be burnt for the driver chip 60 in a motor factory, and related calibration work needs to be performed on the driver chip 60 in a module factory. However, the driver chip 60 in this implementation is built in the lens motor 1, so that in the production process of the camera module 100, the related calibration data can be directly burnt into the driver chip 60 in the lens motor 1 in the motor factory. This saves a subsequent calibration process in the module factory and improves production efficiency. In addition, when a feature variation of the lens motor 1 is caused by a factor like reliability or a module manufacturing process, it facilitates data comparison after the feature variation on the lens motor 1.

Second, the conventional focus mover 51 is usually slidably connected to the base 20 through roll balls 529, or is connected to the base 20 through a reed. The roll ball-type focus mover 51 cannot implement self-locking because a friction coefficient of the roll ball 529 is small. In addition, when the focus bracket 511 moves relative to the base 20 in the Z direction, a deflection is easily generated, and displacement on an X-Y plane is generated, thereby affecting focus definition. For the reed-type focus mover 51, because an anti-fibrillation effect of the reed is poor, a video effect of the electronic device 1000 is easily affected. In this implementation, the focus bracket 511 is slidably connected to the base 20 through the sliding shaft 90, and is a sliding shaft-type focus mover 51. Because a friction coefficient of the sliding shaft 90 is large, after the focus mover 51 is powered off, the focus mover 51 can still implement self-locking by using a friction force between the focus mover 51 and the sliding shaft 90, and no external power supply is required to continuously power on the lens motor 1. This helps save a power supply and prolong standby time of the electronic device 1000. An anti-fibrillation effect of the sliding shaft 90 is good, which helps ensure a video effect of the electronic device 1000. In addition, when the focus bracket 511 in the sliding shaft-type focus mover 51 moves relative to the base 20 in the Z-axis direction, it is hard to generate a deflection, which helps ensure a focus effect of the lens motor 1 and improve imaging quality of the camera module 100. The tilt angle of the lens 2 may be less than or equal to 3 min.

In addition, in this implementation, the lens motor 1 inputs signals to both the first sub-coil 7211 and the second sub-coil 7212, to push the first bracket 521 and drive the second bracket 522 to move relative to the base 20 in the X-axis direction. In this way, the signals are input to both the first sub-coil 7211 and the second sub-coil 7212, so that the mover 50 can obtain a larger X-direction driving force. This helps increase a speed at which the second bracket 522 moves relative to the base 20 in the X-axis direction, and increase a response speed of the lens motor 1 in the X-axis direction.

The foregoing specifically describes how the lens motor 1 drives the lens 2 to move. The following further specifically describes a connection relationship between a lens assembly 400 and another component in the camera module 100 with reference to related accompanying drawings.

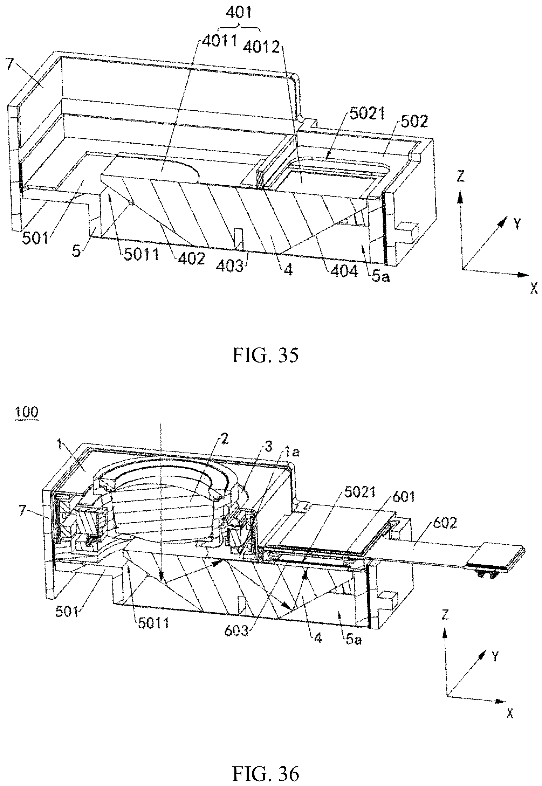

FIG. 35 is a partial sectional view of an implementation of the camera module 100 shown in FIG. 2b on a G-G line. FIG. 36 is a sectional view of an implementation of the camera module 100 shown in FIG. 2b on the G-G line.

As shown in FIG. 3, FIG. 35, and FIG. 36, the module casing 7 may cover the module base 5. The module base 5 may have an internal space 5a. At least a part of the prism 4 may be accommodated in the internal space 5a of the module base 5. For example, the module casing 7 may be fastened to the module base 5 by using an adhesive.

For example, the module base 5 may include a first upper surface 501 and a second upper surface 502. There is a height difference between the first upper surface 501 and the second upper surface 502. For example, the second upper surface 502 may be higher than the first upper surface 501. It should be understood that the height in this implementation is a height in the Z-axis direction.

For example, a first light transmission hole 5011 may be provided on the first upper surface 501. A second light transmission hole 5021 may be provided on the second upper surface 502. The first light transmission hole 5011 may communicate with the second light transmission hole 5021 through the internal space 5a of the module base 5.

For example, the prism 4 may be fastened to the module base 5. The prism 4 may be higher than the first upper surface 501. The lens motor 1 may be fastened to the first upper surface 501. In this case, the mounting space 1a of the lens motor 1 may be disposed opposite to the first light transmission hole 5011, and communicate with the internal space 5a of the module base 5. A part of the prism 4 may be located in the internal space 5a of the module base 5. The other part of the prism 4 may be located in the mounting space 1a of the lens motor 1.

For example, the prism 4 may include a first surface 401, a first slope 402, a second surface 403, and a second slope 404 that are sequentially connected. The first surface 401 may include a first area 4011 and a second area 4012. Both the lens 2 and a photosensitive chip 601 may be located on a side that is of the first surface 401 and that is back to the second surface 403. For example, the lens 2 may be disposed opposite to the first area 4011. The photosensitive chip 601 may be disposed opposite to the second area 4012.

For example, the circuit module 6 may include the photosensitive chip 601, a module circuit board 602, and a light filter 603. The photosensitive chip 601 may be fastened to the module circuit board 602. The light filter 603 may be located on a side that is of the photosensitive chip 601 and that is away from the module circuit board 602. The photosensitive chip 601 is also referred to as an image sensor or a photosensitive element. The photosensitive chip 601 may be configured to collect ambient light, and convert image information carried in the ambient light into an electrical signal.

For example, the circuit module 6 may be fastened to the second upper surface 502. In this case, the light filter 603 may be disposed opposite to the second light transmission hole 5021. After passing through the lens 2, the ambient light enters the prism 4 from the first area 4011 of the first surface 401 of the prism 4. After being reflected a plurality of times inside the prism 4, the ambient light is emitted from the second area 4012 of the first surface 401, passes through the second light transmission hole 5021 and the light filter 603 in sequence, and finally enters the photosensitive chip 601 (FIG. 36 also shows a propagation path of the ambient light).

It may be understood that, in this implementation, the camera module 100 is provided with the mounting space 1a in the lens motor 1, and at least a part of the prism 4 is accommodated in the mounting space 1a, so that the lens motor 1 may sink relative to the prism 4, to reduce a height of the lens motor 1 and reduce an overall height of the camera module 100. This facilitates thinning of the camera module 100.

The foregoing specifically describes the structure of the camera module 100 in an implementation. The following further specifically describes several implementations of the camera module 100 with reference to related accompanying drawings.

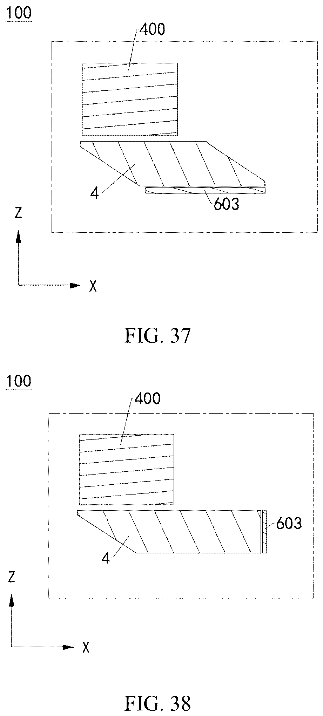

FIG. 37 is a schematic partial sectional view of another implementation of the camera module 100 shown in FIG. 36. FIG. 38 is a schematic partial sectional view of still another implementation of the camera module 100 shown in FIG. 36.

As shown in FIG. 37, a structure of the camera module 100 in this implementation is roughly the same as that of the camera module 100 shown in FIG. 35, and the same part is not described again. A difference lies in that the photosensitive chip 601 of the camera module 100 in this implementation may be located at the bottom of the prism 4. For example, a cross section shape of the prism 4 may be approximately a parallel quadrilateral. External light may be incident to the prism 4 through the lens assembly 400, and enter the photosensitive chip 601 after being reflected by the prism 4.

As shown in FIG. 38, a structure of the camera module 100 in this implementation is roughly the same as that of the camera module 100 shown in FIG. 35, and the same part is not described again. A difference lies in that the photosensitive chip 601 of the camera module 100 in this implementation may be located on a periphery of the prism 4. For example, a cross section shape of the prism 4 may be approximately a trapezoid. External light may be incident to the prism 4 through the lens assembly 400, and enter the photosensitive chip 601 after being reflected by the prism 4.

It should be noted that embodiments in this application and features in embodiments may be combined with each other without a conflict, and any combination of features in different embodiments also falls within the protection scope of this application. In other words, the foregoing described plurality of embodiments may further be combined according to an actual requirement.

It should be noted that all the foregoing accompanying drawings are examples of this application, and do not represent actual sizes of products. In addition, a size proportion relationship between the components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lens motor (1), comprising a stator (1b), a focus bracket (511), an image stabilization bracket (52a), a focus driving mechanism (51a), an image stabilization driving mechanism (52b), and a driver chip (60), wherein
the focus bracket (511) is movably connected to the stator (1b), the image stabilization bracket (52a) is movably connected to the focus bracket (511) and is located on an inner side of the focus bracket (511), and the image stabilization bracket (52a) is configured to mount a lens (2); and
the driver chip (60) is configured to control the focus driving mechanism (51a), so that the focus driving mechanism (51a) drives the focus bracket (511) to drive the image stabilization bracket (52a) to move relative to the stator (1b) in a first direction; and the driver chip (60) is further configured to control the image stabilization driving mechanism (52b), so that the image stabilization driving mechanism (52b) drives the image stabilization bracket (52a) to move relative to the focus bracket (511) in a second direction and a third direction, wherein the first direction is an optical axis direction of the lens (2), and the second direction and the third direction are different from the first direction.

2. The lens motor (1) according to claim 1, wherein the stator (1b) comprises a base (20), the focus bracket (511) is movably connected to the base (20), the base (20) is provided with a first avoidance hole (222a), and an outer circumferential side and an inner circumferential side of the base (20) are communicated with each other through the first avoidance hole (222a); and
the lens motor (1) further comprises a circuit board (30), the circuit board (30) is fastened to the outer circumferential side of the base (20), the driver chip (60) is fastened to the circuit board (30) and is electrically connected to the circuit board (30), and at least a part of the driver chip (60) is located in the first avoidance hole (222a).

3. The lens motor (1) according to claim 2, wherein the image stabilization driving mechanism (52b) comprises an image stabilization coil (72) and an image stabilization magnetic piece (52c), the image stabilization coil (72) is fastened to the circuit board (30) and is electrically connected to the circuit board (30), the image stabilization magnetic piece (52c) is fastened to the image stabilization bracket (52a), and the image stabilization coil (72) and the image stabilization magnetic piece (52c) are disposed opposite to each other; and
the image stabilization coil (72) is electrically connected to the driver chip (60), and the driver chip (60) is further configured to control the image stabilization coil (72), to drive, through cooperation between the image stabilization coil (72) and the image stabilization magnetic piece (52c), the image stabilization bracket (52a) to move relative to the focus bracket (511) in the second direction or the image stabilization bracket (52a) to move relative to the focus bracket (511) in the third direction.

4. The lens motor (1) according to claim 3, wherein the image stabilization coil (72) passes through the first avoidance hole (222a) and faces the image stabilization magnetic piece (52c).

5. The lens motor (1) according to any one of claims 2 to 4, wherein a first avoidance groove (211) is provided on the base (20), and the first avoidance groove (211) penetrates a bottom of the base (20);
a second avoidance groove (50a) is provided on the focus bracket (511), and a bottom space (5112a) of the image stabilization bracket (52a) communicates with the first avoidance groove (211) through the second avoidance groove (50a); and
the first avoidance groove (211), the second avoidance groove (50a), and the bottom space (5112a) of the image stabilization bracket (52a) form a mounting space (1a), and the mounting space (1a) is used to accommodate a part of a prism (4).

6. The lens motor (1) according to any one of claims 2 to 5, wherein the image stabilization bracket (52a) comprises a first bracket (521) and a second bracket (522), the first bracket (521) is located between the focus bracket (511) and a bottom of the second bracket (522), the first bracket (521) is movably connected to the focus bracket (511), and the second bracket (522) is movably connected to the first bracket (521); and
the driver chip (60) is configured to control the image stabilization driving mechanism (52b), so that the image stabilization driving mechanism (52b) drives the first bracket (521) to drive the second bracket (522) to move relative to the focus bracket (511) in the second direction; and the driver chip (60) is further configured to control the image stabilization driving mechanism (52b), so that the image stabilization driving mechanism (52b) drives the second bracket (522) to move relative to the first bracket (521) in the third direction.

7. The lens motor (1) according to claim 6, wherein the image stabilization coil (72) comprises a first coil (721) and a second coil (722), the image stabilization magnetic piece (52c) comprises a first magnetic piece (523) and a second magnetic piece (524), the first coil (721) and the first magnetic piece (523) are disposed opposite to each other, and the second coil (722) and the second magnetic piece (524) are disposed opposite to each other; and
the driver chip (60) is configured to control the first coil (721), to drive, through cooperation between the first coil (721) and the first magnetic piece (523), the first bracket (521) to move relative to the focus bracket (511) in the second direction, and the driver chip (60) is further configured to control the second coil (722), to drive, through cooperation between the second coil (722) and the second magnetic piece (524), the second bracket (522) to move relative to the first bracket (521) in the third direction.

8. The lens motor (1) according to claim 7, wherein the first coil (721) comprises a first sub-coil (7211) and a second sub-coil (7212), the first magnetic piece (523) comprises a first magnetic sub-piece (5231) and a second magnetic sub-piece (5232), the first magnetic sub-piece (5231) and the second magnetic sub-piece (5232) are located between the first sub-coil (7211) and the second sub-coil (7212), the first sub-coil (7211) and the first magnetic sub-piece (5231) are disposed opposite to each other, and the second sub-coil (7212) and the second magnetic sub-piece (5232) are disposed opposite to each other.

9. The lens motor (1) according to any one of claims 6 to 8, wherein the first bracket (521) is movably connected to the focus bracket (511) through roll balls (529), and/or the second bracket (522) is movably connected to the first bracket (521) through roll balls (529).

10. The lens motor (1) according to any one of claims 6 to 9, wherein the first bracket (521) comprises a first branch (521a) and a second branch (521b), the second branch (521b) is connected to the first branch (521a), and an angle between the second branch (521b) and the first branch (521a) is less than 180°; and
a bottom of the focus bracket (511) comprises a first portion (5111) and a second portion (5112), the second portion (5112) is stacked on the first portion (5111), a part of the second portion (5112) is disposed opposite to the first branch (521a), and another part of the second portion (5112) is disposed opposite to the second branch (521b).

11. The lens motor (1) according to claim 10, wherein the bottom space (5112a) is located at a bottom of the second portion (5112), an inner side surface of the first portion (5111) faces the bottom space (5112a) of the second portion (5112).

12. The lens motor (1) according to any one of claims 2 to 11, wherein the focus bracket (511) is movably connected to the stator (1b) through a sliding shaft (90).

13. The lens motor (1) according to any one of claims 2 to 12, wherein the focus driving mechanism (51a) comprises a focus coil (71) and a focus magnetic piece (512), the focus coil (71) is fastened to the circuit board (30) and is electrically connected to the circuit board (30), the focus magnetic piece (512) is fastened to the focus bracket (511), and the focus coil (71) and the focus magnetic piece (512) are disposed opposite to each other; and
the focus coil (71) is electrically connected to the driver chip (60), and the driver chip (60) is further configured to control the focus coil (71), to drive, through cooperation between the focus coil (71) and the focus magnetic piece (512), the focus bracket (511) to drive the image stabilization bracket (52a) to move relative to the stator (1b) in the first direction.

14. The lens motor (1) according to claim 13, wherein the lens motor (1) further comprises a first magnetic attraction sheet (40), the first magnetic attraction sheet (40) is fastened to the circuit board (30), the focus coil (71) is located between the first magnetic attraction sheet (40) and the focus magnetic piece (512), and the focus bracket (511) squeezes the stator (1b) under an action force between the first magnetic attraction sheet (40) and the focus magnetic piece (512).

15. The lens motor (1) according to any one of claims 2 to 14, wherein the lens motor (1) further comprises a first sensor (81), the first sensor (81) is fastened to the circuit board (30) and is electrically connected to the circuit board (30), the driver chip (60) is electrically connected to the first sensor (81), the first sensor (81) is configured to detect a position of the focus bracket (511), and the driver chip (60) is further configured to obtain information about the first sensor (81).

16. The lens motor (1) according to any one of claims 1 to 15, wherein the lens motor (1) further comprises a cover (53), the cover (53) is connected to the focus bracket (511), and the cover (53) is located on a side that is of the image stabilization bracket (52a) and that is away from the focus bracket (511).

17. A camera module (100), wherein the camera module (100) comprises a lens (2), a prism (4), a photosensitive chip (601), and the lens motor (1) according to any one of claims 1 to 16, wherein the lens (2) is mounted on the image stabilization bracket (52a), the prism (4) is located on a light exit side of the lens (2), and the photosensitive chip (601) located on a light exit side of the prism (4).

18. The camera module (100) according to claim 17, wherein the prism (4) comprises a first surface (401), a first slope (402), a second surface (403), and a second slope (404) that are sequentially connected, the lens (2) and the photosensitive chip (601) are both located on a side that is of the first surface (401) and that is back to the second surface (403), the first surface (401) comprises a first area (4011) and a second area (4012), the lens (2) and the first area (4011) are disposed opposite to each other, and the photosensitive chip (601) and the second area (4012) are disposed opposite to each other, wherein
after passing through the lens (2), ambient light enters the prism (4) from the first area (4011) of the first surface (401); after being reflected a plurality of times inside the prism (4), the ambient light is emitted from the second area (4012) of the first surface (401); and the photosensitive chip (601) collects the ambient light passing through the prism (4).

19. An electronic device (1000), comprising a device housing (200) and the camera module (100) according to claim 17 or 18, wherein the camera module (100) is disposed on the device housing (200).
